# EUROPEAN PATENT SPECIFICATION

(11) **EP 4 354 759 B1**
(45) Date of publication and mention of the grant of the patent: **25.11.2026**
(21) Application number: 22852090.4
(22) Date of filing: 29.07.2022
(51) Int. Cl.: H04B 7/185, H04L 1/1607, H04L 69/04, H04L 69/324, H04L 69/326

(54) **METHOD, SYSTEM AND APPARATUS FOR TRANSMITTING AN APPLICATION LAYER RECEIPT IN A SATELLITE COMMUNICATION SYSTEM SUPPORTING A SHORT MESSAGE COMMUNICATION FUNCTION**
VERFAHREN, SYSTEM UND VORRICHTUNG ZUR ÜBERMITTLUNG EINER EMPFANGSBESTÄTIGUNG AUF ANWENDUNGSEBENE IN EINEM SATELLITENKOMMUNIKATIONSSYSTEM, DAS EINE KURZNACHRICHTEN-KOMMUNIKATIONSFUNKTION UNTERSTÜTZT
PROCÉDÉ, SYSTÈME ET DISPOSITIF POUR LA TRANSMISSION D'UN ACCUSÉ DE RÉCEPTION AU NIVEAU DE LA COUCHE APPLICATION DANS UN SYSTÈME DE COMMUNICATION PAR SATELLITE PRISANT EN CHARGE UNE FONCTION DE COMMUNICATION PAR MESSAGES COURTS

(30) Priority: 31.07.2021 CN 202110877181
(43) Date of publication of application: 17.04.2024
(73) Proprietor: Huawei Technologies Co., Ltd., Longgang Shenzhen, Guangdong 518129 (CN)
(72) Inventor: ZHU, Ying, Shenzhen, Guangdong 518129 (CN); LI, Zhenzhou, Shenzhen, Guangdong 518129 (CN); QIAN, Feng, Shenzhen, Guangdong 518129 (CN); GAN, Wenyu, Shenzhen, Guangdong 518129 (CN); ZHU, Xudong, Shenzhen, Guangdong 518129 (CN); YAO, Zhendong, Shenzhen, Guangdong 518129 (CN)
(74) Representative: Pfenning, Meinig & Partner mbB
(86) International application number: PCT/CN2022/109263
(87) International publication number: WO 2023/011377

(56) References cited:
- WO-A1-2016/173155
- WO-A1-2020/198234
- CN-A- 103 259 776
- CN-A- 109 639 679
- CN-A- 110 425 944
- CN-A- 110 995 784
- CN-A- 111 669 219
- CN-A- 111 741 013
- CN-A- 112 104 071
- CN-A- 112 615 760
- CN-A- 112 867 063
- CN-B- 102 769 574
- US-A1- 2018 176 656

## Description

### TECHNICAL FIELD

This application relates to the field of satellite communication, and in particular, to a method for transmitting an application layer receipt in a BeiDou communication system, a communication apparatus and a chip/chip system.

### BACKGROUND

A BeiDou satellite navigation system is a major infrastructure that integrates positioning, time serving, and communication. ABeiDou short message communication service is one of features that enable the BeiDou satellite navigation system to be different from other global navigation systems such as GPS, GLONASS, and GALILEO. The BeiDou short message communication service is especially suitable for communication in areas such as an ocean, a desert, grassland, and no-man's land where mobile communication is not covered or cannot be covered, or a communication system is damaged. A short message system of a BeiDou-3 navigation satellite system upgrades a short message technical system, and some necessary resources of a BeiDou short message service communication system are opened to civil users. For civil services and device features, a communication protocol needs to be designed based on features of the BeiDou short message service communication system.

At present, the BeiDou short message service communication system uses a feedback mechanism of a satellite link control protocol (satellite link control protocol, SLC) to ensure that a transmitted data packet is not lost. To be specific, a receiving device may send an acknowledgment character (acknowledgement character, ACK) of an SLC layer to a sending device at the end of a receiving window, and the sending device may determine, based on the ACK, a data packet receiving status of the receiving device at the SLC layer. The sending device may retransmit data when determining that the receiving device does not receive the complete data packet. However, this can only ensure that the sending device can determine a data packet receiving status of the receiving device at the SLC layer, but cannot determine a data packet parsing status at an application layer. CN 102769 574 B discusses method and a device capable of conducting business hardware acceleration. WO 2020/198234 A1 discusses methods, systems, and devices for uplink data integrity protection in a communication system.

### SUMMARY

The invention is defined by a method for transmitting an application layer receipt in a satellite communication system supporting a short message communication function according to claim 1, a communication apparatus supporting a short message communication function according to claim 14 and a chip or a chip system supporting a short message communication function according to claim 15. Further embodiments are defined by the dependent claims.

### BRIEF DESCRIPTION OF DRAWINGS

FIG. 1A is a schematic diagram of a BeiDou communication system according to an embodiment of this application;
FIG. 1B is a schematic diagram of a BeiDou communication system according to an embodiment of this application;
FIG. 1C is a schematic diagram of a BeiDou communication system according to an embodiment of this application;
FIG. 2A-1 to FIG. 2B-2 are schematic diagrams of an inbound protocol in a BeiDou communication system according to an embodiment of this application;
FIG. 3A-1 to FIG. 3B-2 are schematic diagrams of an outbound protocol in a BeiDou communication system according to an embodiment of this application;
FIG. 4 is a schematic flowchart of ACK processing in a BeiDou communication system according to an embodiment of this application;
FIG. 5A and FIG. 5B are a schematic flowchart of protocol processing in a BeiDou communication system according to an embodiment of this application;
FIG. 6A is a schematic diagram of inbound transmission in a BeiDou communication system according to an embodiment of this application;
FIG. 6B is a schematic diagram of outbound transmission in a BeiDou communication system according to an embodiment of this application;
FIG. 7A and FIG. 7B are a schematic diagram of an application layer receipt mechanism in a BeiDou communication system according to an embodiment of this application;
FIG. 8 is a schematic diagram of an application layer packet in a BeiDou communication system according to an embodiment of this application;
FIG. 9 is a schematic diagram of a receipt frame in a BeiDou communication system according to an embodiment of this application;
FIG. 10 is a schematic diagram of a receipt frame in a BeiDou communication system according to an embodiment of this application;
FIG. 11A and FIG. 11B are a schematic diagram of an application layer receipt mechanism in a BeiDou communication system according to an embodiment of this application;
FIG. 12 is a schematic diagram of a hardware structure according to an embodiment of this application;
FIG. 13 is a schematic flowchart of a method for transmitting an application layer receipt in a BeiDou communication system according to an embodiment of this application;
FIG. 14 is a schematic diagram of a structure of a communication apparatus according to an embodiment of this application;
FIG. 15 is a schematic diagram of a structure of another communication apparatus according to an embodiment of this application;
FIG. 16 is a schematic diagram of a structure of another communication apparatus according to an embodiment of this application; and
FIG. 17 is a schematic diagram of a structure of another communication apparatus according to an embodiment of this application.

### DESCRIPTION OF EMBODIMENTS

The technical solutions according to embodiments of this application are clearly and completely described in the following with reference to the accompanying drawings. In the descriptions of embodiments of this application, "/" represents "or" unless otherwise specified. For example, A/B may represent A or B. In the text, "and/or" describes only an association relationship between associated objects and represents that three relationships may exist. For example, A and/or B may represent the following three cases: Only A exists, both A and B exist, and only B exists.

The following terms "first" and "second" are merely intended for a purpose of description, and shall not be understood as implying or implying relative importance or implicitly indicating a quantity of indicated technical features. Therefore, a feature limited by "first" or "second" may explicitly or implicitly include one or more of the features. In the descriptions of embodiments of this application, unless otherwise specified, "a plurality of" means two or more.

The following describes a BeiDou communication system 10 provided in an embodiment of this application.

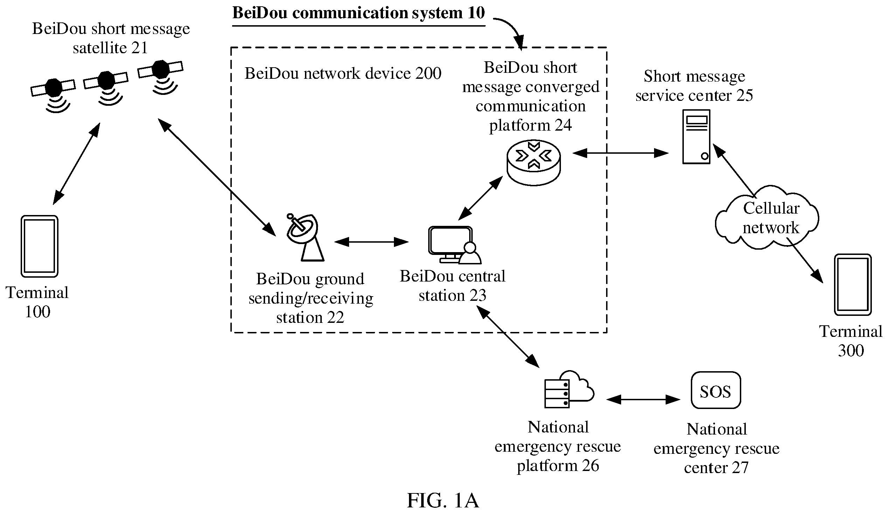

As shown in FIG. 1A, the BeiDou communication system 10 may include but is not limited to a terminal 100, a BeiDou short message satellite 21, a BeiDou network device 200, a short message service center 25, and a terminal 300. Optionally, the BeiDou communication system 10 may further include an emergency rescue platform 26 and an emergency rescue center 27.

The terminal 100 in a BeiDou network may send short message information to the terminal 300 in a cellular network. Specifically, the terminal 100 may first send the short message information to the BeiDou short message satellite 21, and the BeiDou short message satellite 21 performs only relay, and may directly forward the short message information sent by the terminal 100 to the BeiDou network device 200 on the ground. The BeiDou network device 200 may parse, according to a BeiDou communication protocol, the short message information forwarded by the satellite, and forward, to the short message service center (short message service center, SMSC) 25, packet content obtained by parsing the short message information. The short message service center 25 may forward the packet content to the terminal 300 through a conventional cellular communication network. The BeiDou network device 200 may also send, to the emergency rescue center 27 through the emergency rescue platform 26, a packet of an emergency rescue type sent by the terminal 100.

The terminal 300 (which may be referred to as cellular user equipment) in the cellular network may also send short message information to the terminal 100 in the BeiDou network. The terminal 300 may send a short message to the short message service center 25 through the conventional cellular communication network (which is also referred to as a cellular network). The short message service center 25 may forward the short message of the terminal 300 to the BeiDou network device 200. The BeiDou network device 200 may send the short message of the terminal 300 to the terminal 100 through relay of the BeiDou short message satellite 21.

The BeiDou network device 200 may include a BeiDou ground sending/receiving station 22, a BeiDou central station 23, and a BeiDou short message converged communication platform 24. The BeiDou ground sending/receiving station 22 may include one or more devices having a sending function and one or more devices having a receiving function, or may include one or more devices having a sending function and a receiving function. This is not limited herein. The BeiDou ground sending/receiving station 22 may be used for a function of processing data by the BeiDou network device 200 at a physical layer (physical layer protocol, PHY). The BeiDou central station 23 may be used for a function of processing data by the BeiDou network device 200 at a satellite link control layer and a message data convergence protocol (message data convergence protocol, MDCP). The BeiDou short message converged communication platform 24 may be used for a function of processing data at an application layer (application layer protocol, APP).

In the BeiDou communication system 10, a sending device may send data to a receiving device. After receiving a data frame sent by the sending device, the receiving device may send an acknowledgment character (ACK) of an SLC layer to the sending device. The sending device may determine, based on the ACK, whether the receiving device successfully receives the data frame.

The following describes an ACK mechanism of the BeiDou communication system 10 according to an embodiment of this application.

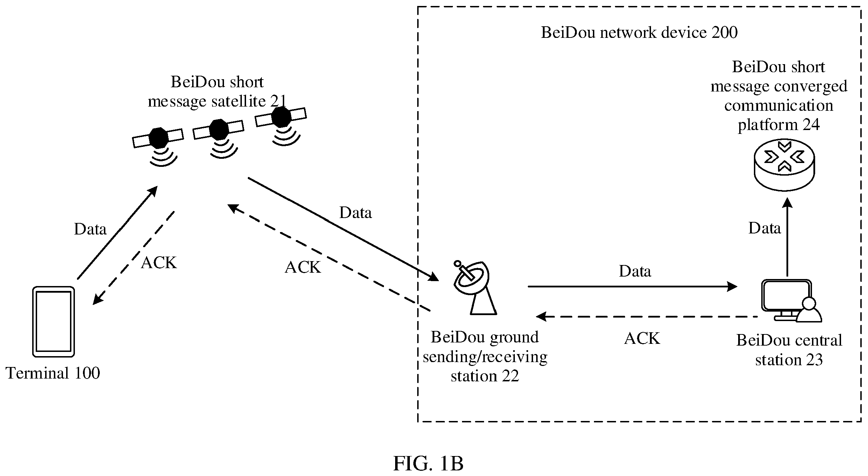

FIG. 1B shows an inbound data transmission process in a BeiDou communication system according to an embodiment of this application.

As shown in FIG. 1B, data inbound may mean that the terminal 100 sends data to the BeiDou network device 200. For example, the terminal 100 may send data frames to the BeiDou ground sending/receiving station 22. The BeiDou ground sending/receiving station 22 may send the data frames to the BeiDou central station 23. The BeiDou central station 23 may aggregate the data frames into an application layer packet and report the application layer packet to the BeiDou short message converged communication platform 24. After receiving the data frame sent by the terminal 100, the BeiDou central station 23 may return an ACK of the SLC layer to the terminal 100. The ACK may indicate whether the BeiDou network device 200 successfully receives the data frame sent by the terminal 100. The data frame may be an SLC PDU in embodiments of this application.

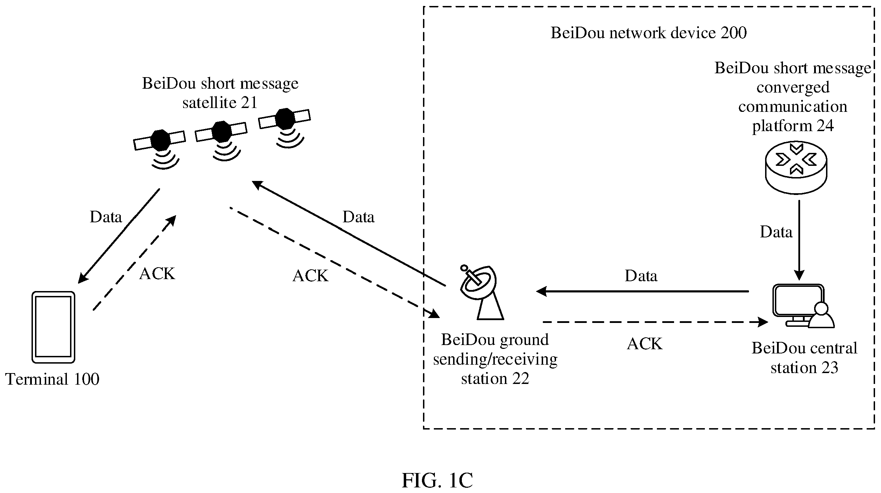

FIG. 1C shows an outbound data transmission process in a BeiDou communication system according to an embodiment of this application.

As shown in FIG. 1C, data outbound may mean that the BeiDou network device 200 sends data to the terminal 100. For example, the BeiDou short message converged communication platform 24 may send an application layer packet to the BeiDou central station 23. Then, the BeiDou central station 23 may segment the application layer packet into one or more data frames, and send the one or more data frames to the terminal 100 through the BeiDou ground sending/receiving station 22 and the BeiDou short message satellite 21. After receiving the data frame sent by the BeiDou network device 200, the terminal 100 may return an ACK of the SLC layer to the BeiDou network device 200. The ACK may indicate whether the terminal 100 successfully receives the data frame sent by the BeiDou network device 200. The data frame may be an SLC PDU in embodiments of this application.

In a possible implementation, in the outbound transmission process, the BeiDou network device 200 may splice, at the SLC layer, data frames sent to a plurality of terminals to obtain outbound data, and then, send the outbound data to all the terminals. Therefore, an SLC layer outbound resource of the BeiDou network device 200 is insufficient, and processing retransmitted data causes operation resource consumption to the BeiDou network device 200. Therefore, after sending the data, the BeiDou network device 200 may clear cache of the sent data. Similarly, after receiving the data frame sent by the BeiDou network device 200, the terminal 100 does not return the ACK of the SLC layer to the BeiDou network device 200. There is no retransmission mechanism of the SLC layer during outbound transmission.

The following describes a protocol architecture of inbound data of the BeiDou communication system 10 according to an embodiment of this application.

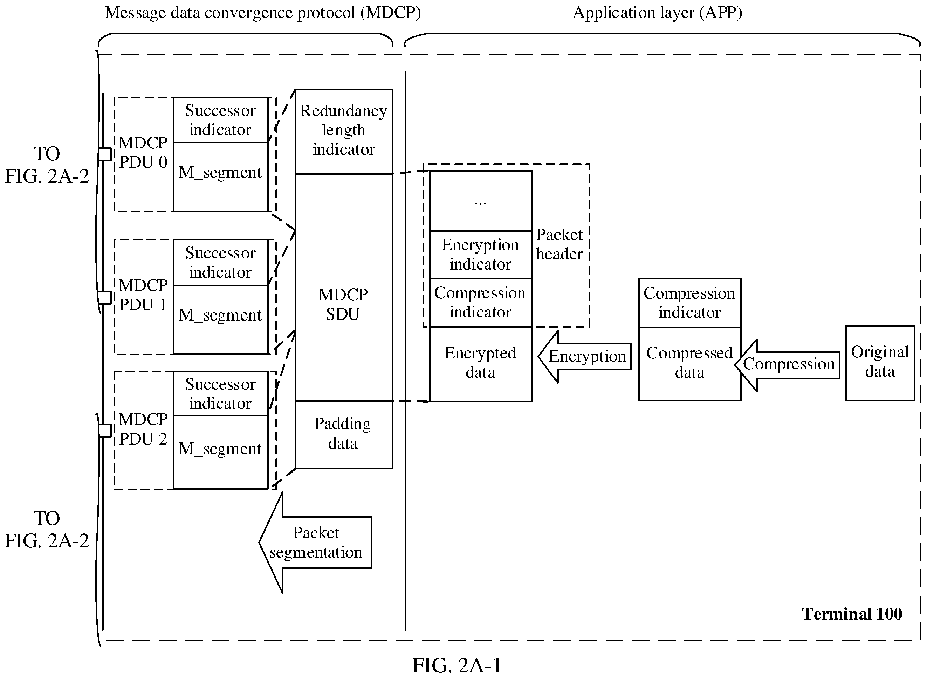

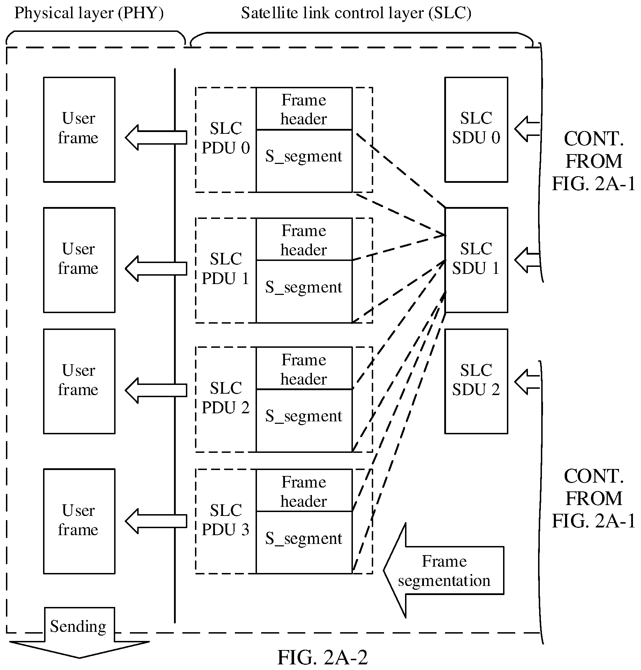

FIG. 2A-1 and FIG. 2A-2 are a schematic diagram of a protocol encapsulation architecture of inbound data of the BeiDou communication system 10 according to an embodiment of this application.

As shown in FIG. 2A-1 and FIG. 2A-2 , a BeiDou packet transmission protocol layer on the terminal 100 may be divided into an application layer, a message data convergence protocol, a satellite link control layer, and a physical layer.

When the terminal 100 sends data to the BeiDou network device 200, a working process of a BeiDou packet transmission protocol on the terminal 100 may be as follows:

At the APP layer, the terminal 100 may encode and compress original data to obtain compressed data. The terminal 100 may encrypt the compressed data to obtain encrypted data, and add packet header information in front of the encrypted data, to obtain an application layer packet. The original data may include but is not limited to text information entered by a user, a received user quantity indication, a received user ID, location information of the terminal 100, a voice, an image, and an animation. The packet header information may include but is not limited to a compression indicator field and an encryption indicator field. The compression indicator field may indicate a type of an encoding and compression algorithm used by the terminal 100 to compress data. The encryption indicator field indicates a type of an encryption algorithm used by the terminal 100 to encrypt data.

Optionally, after encoding and compressing the original data to obtain the compressed data, the terminal 100 may add the compression indicator field in front of the compressed data. Then, the terminal 100 encrypts, by using a key, the compressed data to which the compression indicator field is added, to obtain the encrypted data.

At the MDCP layer, the terminal 100 may obtain, through an inter-layer interface, the application layer packet delivered by the APP layer, and use the application layer packet as one service data unit (server data unit, SDU) of the MDCP layer, which is briefly referred to as an MDCP SDU. At the MDCP layer, the terminal 100 may add padding (padding) data to a tail of the MDCP SDU to a specified length, and add a redundancy length indicator field to the MDCP SDU. The redundancy length indicator field may indicate a length of the padding data. The terminal 100 may segment the MDCP SDU to which the padding data and the redundancy length indicator field are added into one or more pieces of MDCP segment data (M_segment) with a fixed length, and add a successor indicator field to a header of each piece of MDCP segment data, to obtain a protocol data unit (protocol data unit, PDU) of the MDCP layer, which is briefly referred to as an MDCP PDU. That is, the MDCP PDU includes the M_segment and the successor indicator field. The successor indicator field may indicate a sequence of the current MDCP PDU in a plurality of MDCP PDUs of a same MDCP SDU, or the current MDCP PDU is a unique MDCP PDU of the MDCP SDU.

At the SLC layer, the terminal 100 may obtain, through an inter-layer interface, the MDCP PDU delivered by the MDCP layer as an SDU of the SLC layer, namely, an SLC SDU. At the SLC layer, the terminal 100 may segment the SLC SDU into one or more (for example, four) pieces of SLC segment data (S_segment) with a fixed length, and add frame header information to a header of each piece of S_segment, to obtain a PDU of the SLC layer, namely, an SLC PDU. The frame header information includes a service data unit alternated indicator (service data unit alternated Indicator, SAI) field, a total frame quantity field, and a frame sequence number field.

The SAI field may indicate whether the SLC PDU belongs to an SLC SDU that is not sent.

The total frame quantity field may indicate a total quantity of SLC PDUs included in an SLC SDU to which the SLC PDU belongs.

The frame sequence number field may indicate a sequence number of the SLC PDU in an SLC SDU to which the SLC PDU belongs.

At the PHY layer, the terminal 100 may obtain, through an inter-layer interface, the SLC PDU delivered by the SLC layer, and use the SLC PDU as a user frame of the PHY layer. The terminal 100 may perform physical layer processing (for example, operations such as encoding, pilot insertion, modulation, and spreading) on the user frame to obtain the inbound data. Then, the terminal 100 may send the inbound data to the BeiDou short message satellite 21, and the BeiDou short message satellite 21 relays and forwards the inbound data to the BeiDou network device 200.

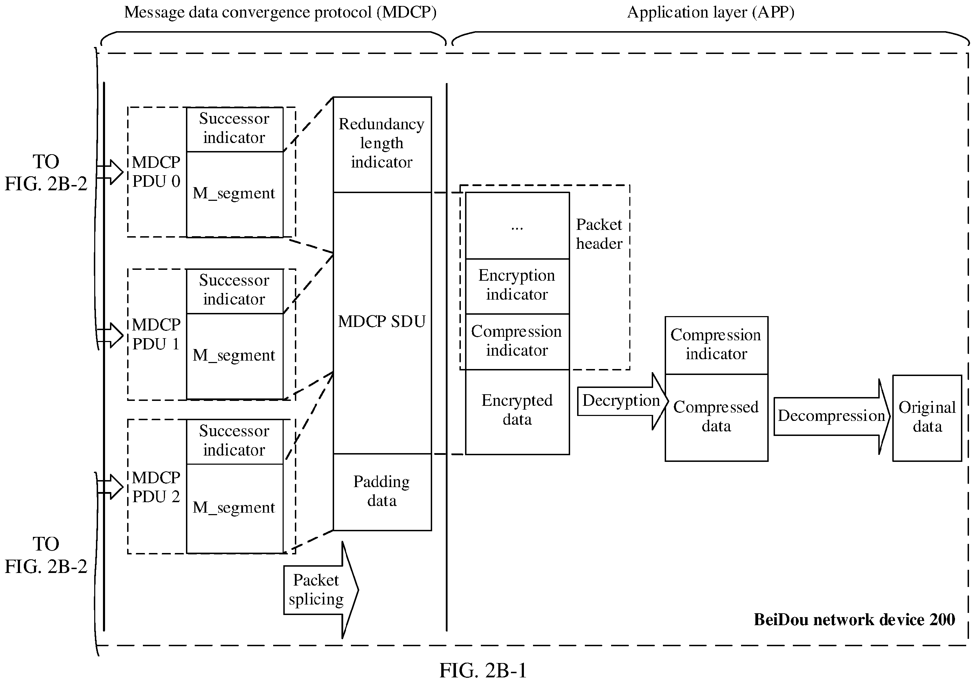

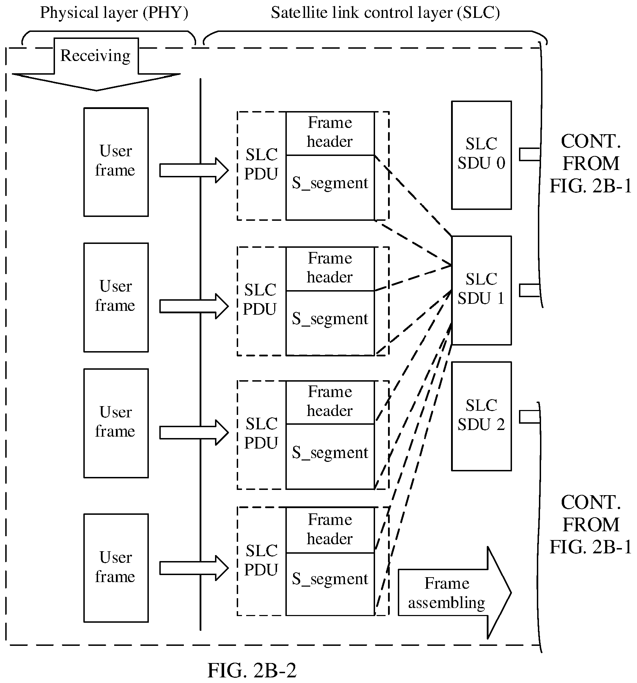

FIG. 2B-1 and FIG. 2B-2 are a schematic diagram of a protocol parsing architecture of inbound data of the BeiDou communication system 10 according to an embodiment of this application.

As shown inFIG. 2B-1 and FIG. 2B-2, a BeiDou packet transmission protocol layer on the BeiDou network device 200 may be divided into an application layer, a message data convergence protocol, a satellite link control layer, and a physical layer. The BeiDou network device 200 may include but is not limited to a BeiDou ground sending/receiving station 22, a BeiDou central station 23, and a BeiDou short message converged communication platform 24. The BeiDou ground sending/receiving station 22 may be configured to be responsible for protocol processing of the PHY layer. The BeiDou central station 23 may be configured to be responsible for protocol processing of the SLC layer and the MDCP layer. The BeiDou short message converged communication platform 24 may be configured to be responsible for protocol processing of the APP layer.

When the terminal 100 sends data to the BeiDou network device 200, a working process of a BeiDou packet transmission protocol on the terminal 100 may be as follows:

At the PHY layer, the BeiDou network device 200 may obtain the inbound data sent by the terminal 100. The BeiDou network device 200 performs physical layer processing (for example, operations such as despreading, demodulation, pilot removal, and decoding) on the inbound data, to obtain the user frames. The BeiDou network device 200 may deliver the user frames to the SLC layer as SLC PDUs of the SLC layer through an inter-layer interface.

At the SLC layer, the BeiDou network device 200 may splice SLC PDUs belonging to a same SLC SDU into one SLC SDU based on frame header information of the SLC PDU. The BeiDou network device 200 may deliver the SLC SDU to the MDCP layer as an MDCP PDU of the MDCP layer through an inter-layer interface.

At the MDCP layer, the BeiDou network device 200 may splice all MDCP PDUs belonging to a same MDCP SDU based on a receiving time point, and remove padding data and a redundancy length indicator field from a spliced MDCP PDU to obtain the MDCP SDU. The BeiDou network device 200 may deliver the MDCP SDU to the APP layer as an application layer packet received by the APP layer through an inter-layer interface.

At the APP layer, the BeiDou network device 200 may decrypt, based on a packet header of the application layer packet, encrypted data in the application layer packet, to obtain compressed data. The BeiDou network device 200 may decompress and decode the compressed data to obtain original data.

In this embodiment of this application, the foregoing protocol processing process is merely an example for description, and a specific operation of protocol processing is not limited in this application.

The following describes a protocol architecture of outbound data of the BeiDou communication system 10 according to an embodiment of this application.

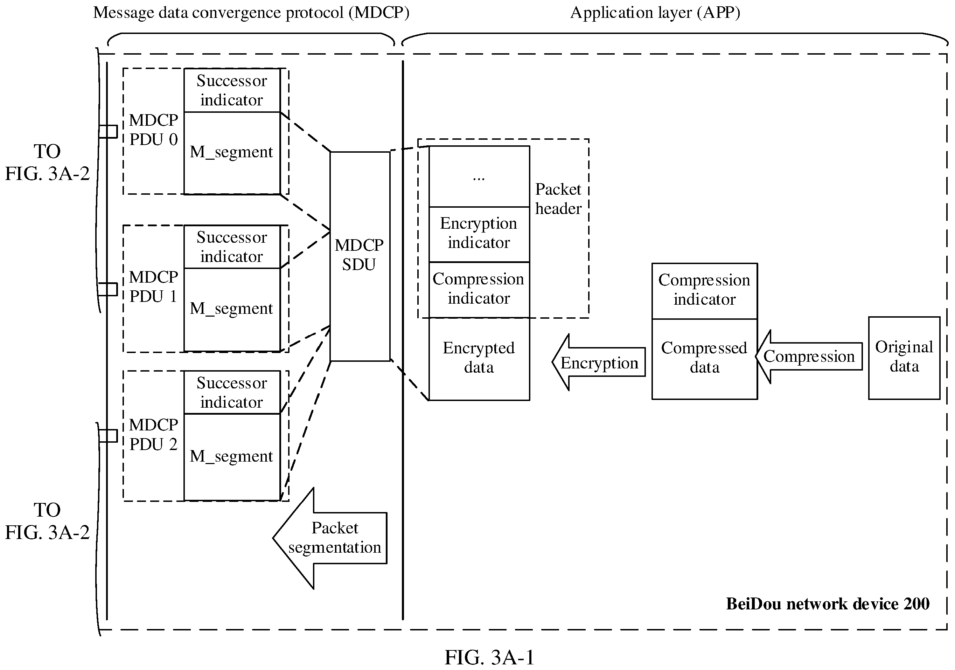

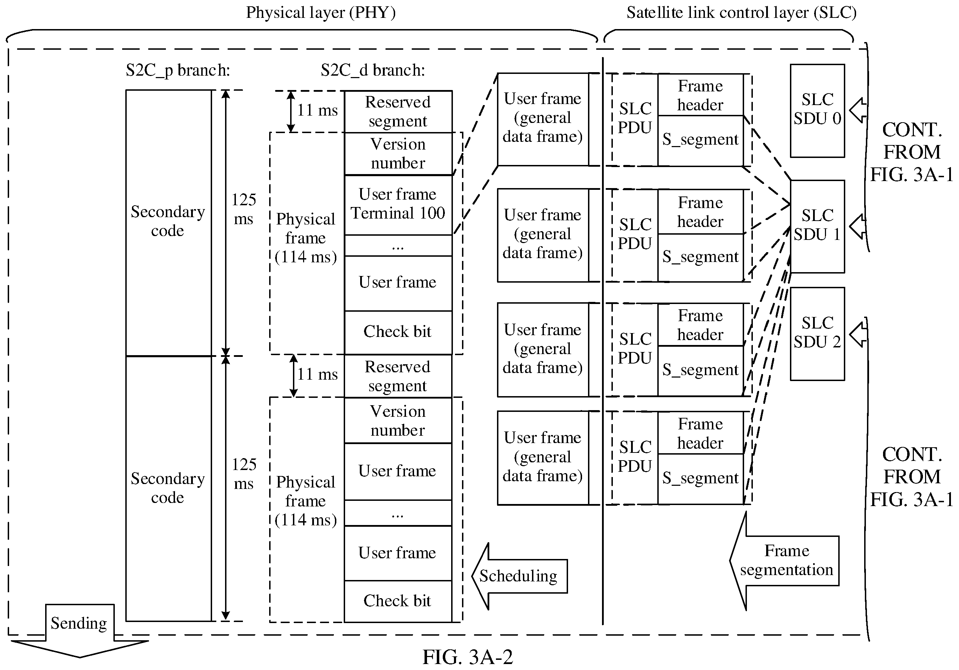

FIG. 3A-1 and FIG. 3A-2 are a schematic diagram of a protocol encapsulation architecture of outbound data of the BeiDou communication system 10 according to an embodiment of this application.

As shown in FIG. 3A-1 and FIG. 3A-2, a BeiDou packet transmission protocol layer on the BeiDou network device 200 may be divided into an application layer, a message data convergence protocol, a satellite link control layer, and a physical layer.

When the BeiDou network device 200 sends data to the terminal 100, a working process of a BeiDou packet transmission protocol on the BeiDou network device 200 may be as follows:
At the APP layer, the BeiDou network device 200 may encode and compress original data to obtain compressed data. The BeiDou network device 200 may encrypt the compressed data to obtain encrypted data, and add packet header information in front of the encrypted data, to obtain an application layer packet. The original data may include but is not limited to data, a text, a flag, a voice, an image, and an animation that are sent by a third-party server (for example, a short message service center 25). The packet header information may include but is not limited to a compression indicator field and an encryption indicator field. The compression indicator field may indicate a type of an encoding and compression algorithm used by the BeiDou network device 200 to compress the data. The encryption indicator field indicates a type of an encryption algorithm used by the BeiDou network device 200 to encrypt the data.

Optionally, after encoding and compressing the original data to obtain the compressed data, the BeiDou network device 200 may add the compression indicator field in front of the compressed data. Then, the BeiDou network device 200 encrypts, by using a key, the compressed data to which the compression indicator field is added, to obtain the encrypted data.

At the MDCP layer, the BeiDou network device 200 may obtain, through an inter-layer interface, the application layer packet delivered by the APP layer as one MDCP SDU. The BeiDou network device 200 may segment the MDCP SDU into one or more pieces of MDCP segment data (M_segment) with a fixed length, and add a successor indicator field to a header of each piece of MDCP segment data, to obtain an MDCP PDU, that is, the MDCP PDU includes the M_segment and the successor indicator field. The successor indicator field may indicate a sequence of the current MDCP PDU in a same MDCP SDU.

At the SLC layer, the BeiDou network device 200 may obtain, through an inter-layer interface, an MDCP PDU delivered by the MDCP layer as an SLC SDU. The BeiDou network device 200 may segment the SLC SDU into one or more (for example, four) pieces of SLC segment data (S_segment) with a fixed length, and add frame header information to a header of each piece of S_segment, to obtain an SLC PDU. For descriptions of the SLC layer of the BeiDou network device 200, refer to the embodiment inFIG. 2A-1 and FIG. 2A-2 . Details are not described herein again.

At the PHY layer, the BeiDou network device 200 may obtain, through an inter-layer interface, an SLC PDU delivered by the SLC layer as a user frame. The BeiDou network device 200 may splice user frames (which is also referred to as data frames) of a plurality of users or one user together, and then add a frame header (for example, a version number) and a check bit to a spliced user frame to obtain a physical frame. The BeiDou network device 200 may perform physical layer processing (for example, operations such as encoding, pilot insertion, modulation, and spreading) on the physical frame to obtain encoded data of a data branch (an S2C-d branch). The BeiDou network device 200 may form pilot encoded data, namely, outbound data, by using the encoded data of the S2C-d branch and pilot data (which is also referred to as a secondary code) of a pilot branch (an S2C-p branch), and send the outbound data to the BeiDou short message satellite 21, and the BeiDou short message satellite 21 relays and forwards the outbound data to one or more terminals. It may be understood that the pilot data of the S2C-p branch is related to a satellite beam. When the satellite beam is known information, the pilot data of the S2C-p branch is also known, and does not need to be decoded. However, the encoded data of the S2C-d branch needs to be decoded.

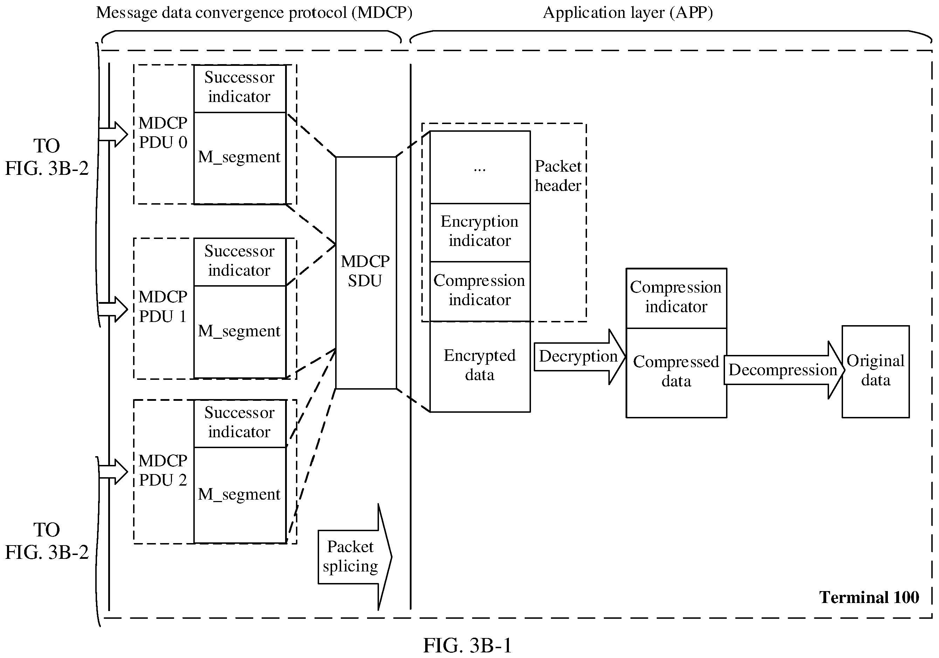

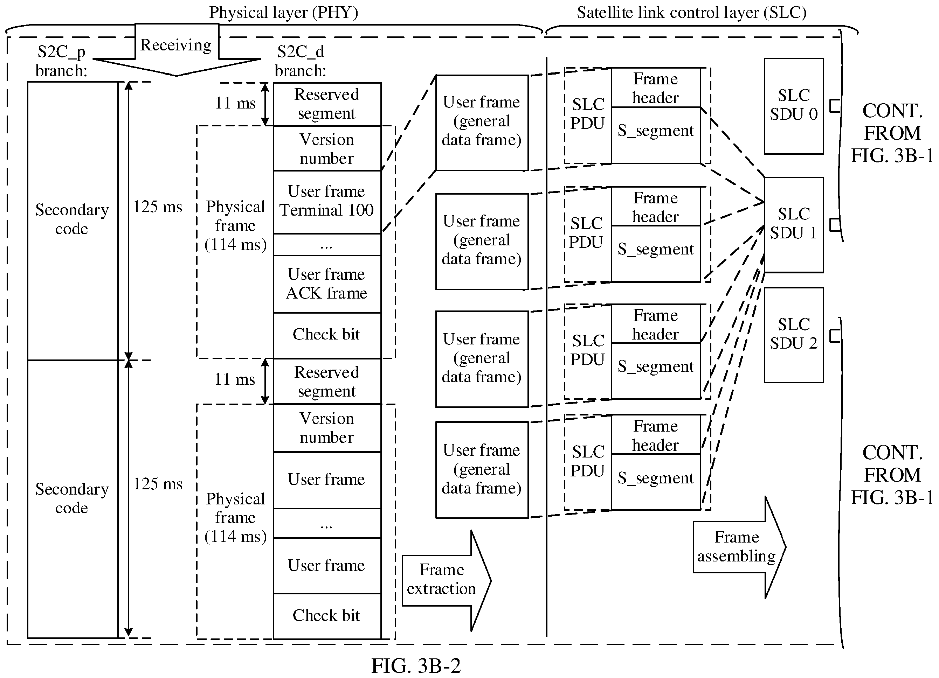

FIG. 3B-1 and FIG. 3B-2 are a schematic diagram of a protocol parsing architecture of outbound data of the BeiDou communication system 10 according to an embodiment of this application.

As shown in FIG. 3B-1 and FIG. 3B-2, a BeiDou packet transmission protocol layer on the terminal 100 may be divided into an application layer, a message data convergence protocol, a satellite link control layer, and a physical layer.

At the PHY layer, the terminal 100 may capture encoded data of an S2C-d branch based on a secondary code of an S2C-p branch sent by the BeiDou network device 200. After capturing the encoded data of the S2C-d branch, the terminal 100 may perform physical layer processing (for example, operations such as despreading, demodulation, pilot removal, and decoding) on the encoded data of the S2C-d branch to obtain a physical frame. The terminal 100 may extract, from the physical frame, a user frame that belongs to the terminal 100. The terminal 100 may deliver the user frame to the SLC layer as an SLC PDU of the SLC layer through an inter-layer interface.

At the SLC layer, when the user frame received by the terminal 100 is a common data frame, the terminal 100 may splice SLC PDUs belonging to a same SLC SDU into one SLC SDU. The terminal 100 may deliver the SLC SDU to the MDCP layer as an MDCP PDU of the MDCP layer through an inter-layer interface. When the user frame received by the terminal 100 is an ACK frame, the terminal 100 may retransmit the current SLC SDU/send a next SLC SDU/stop sending an SLC SDU.

At the MDCP layer, the terminal 100 may splice one or more MDCP PDUs into one MDCP SDU. The terminal 100 may deliver, through an inter-layer interface, the MDCP SDU to the APP layer as an application layer packet received by the APP layer.

At the APP layer, the terminal 100 may decrypt the application layer packet to obtain compressed data. Then, the terminal 100 decompresses and decodes the compressed data to obtain original data.

In this embodiment of this application, the foregoing protocol processing process is merely an example for description, and a specific operation of protocol processing is not limited in this application.

The following describes an ACK processing procedure provided in an embodiment of this application.

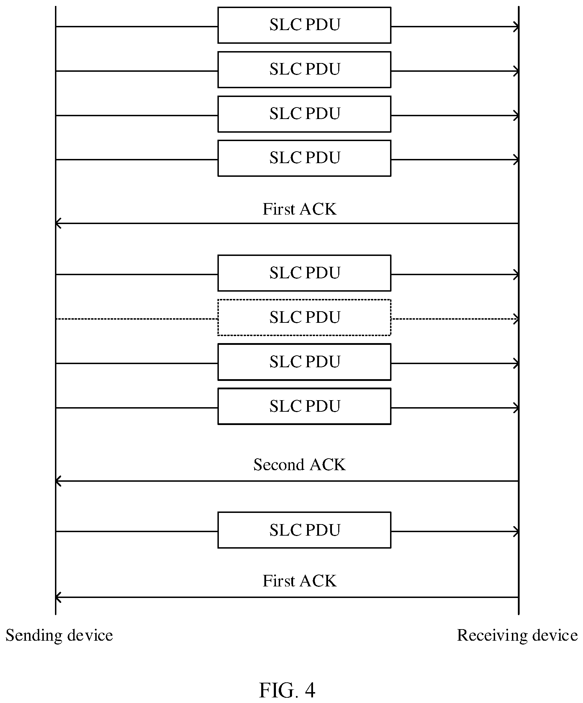

FIG. 4 is a schematic flowchart of ACK processing in the BeiDou communication system 10 according to an embodiment of this application.

As shown in FIG. 4, a sending device may generate an application layer packet at an application layer. Then, the sending device may deliver the application layer packet to an MDCP layer as an MDCP SDU of the MDCP layer. Next, the sending device may segment the MDCP SDU into a plurality of MDCP PDUs at the MDCP layer. Then, the sending device may deliver the MDCP PDU to an SLC layer as an SLC SDU of the SLC layer, and segment the SLC SDU into N SLC PDUs at the SLC layer, where N is a positive integer (for example, 4). Frame header information of the SLC PDU includes a service data unit alternated indicator (service data unit alternated Indicator, SAI) field, a total frame quantity field, and a frame sequence number field. The SAI field may indicate whether the SLC PDU belongs to an SLC SDU that is not sent. The total frame quantity field may indicate a total quantity of SLC PDUs included in an SLC SDU to which the SLC PDU belongs. The frame sequence number field may indicate a sequence number of the SLC PDU in an SLC SDU to which the SLC PDU belongs.

The sending device may send the SLC PDU of the SLC SDU to a receiving device. The receiving device may determine, based on the frame header information of the SLC PDU, whether all the SLC PDUs of the SLC SDU are received.

If the receiving device determines, based on the frame header information, that all the SLC PDUs of the SLC SDU are received, the receiving device may send a first ACK to the sending device. The first ACK may indicate that the receiving device has received all the SLC PDUs of the SLC SDU. After receiving the first ACK, the sending device may determine, at the SLC layer, that the receiving device receives the SLC PDU of the SLC SDU. If the sending device sends an SLC PDU of a last SLC SDU of the MDCP SDU, the sending device may end a sending operation. If the sending device sends an SLC PDU of a non-last SLC SDU of the MDCP SDU, the sending device may continue to send an SLC PDU of a next SLC SDU of the MDCP SDU.

If the receiving device determines, based on the frame header information, that not all SLC PDUs of the SLC SDU are received, the receiving device may send a second ACK to the sending device. The second ACK may indicate that the receiving device does not receive all the SLC PDUs of the SLC SDU. After receiving the second ACK, the sending device may retransmit all the SLC PDUs of the SLC SDU to the receiving device.

In a possible implementation, the second ACK may further indicate a frame sequence number of an SLC PDU that is not received. After receiving the second ACK, the sending device may retransmit, to the receiving device, the SLC PDU that is not received and that is indicated by the second ACK.

For example, as shown in FIG. 4, after receiving the second ACK, the sending device retransmits an SLC PDU that is not received by the receiving device. After receiving the SLC PDU, the receiving device may feed back the first ACK to the sending device.

In an inbound process, the sending device may be the terminal 100, and the receiving device may be the BeiDou network device 200. In an outbound process, the sending device may be the BeiDou network device 200, and the receiving device may be the terminal 100.

This can also ensure a normal data transmission process when data sent by the sending device to the receiving device is lost, so that the receiving device can receive the data sent by the sending device.

In a possible implementation, in the BeiDou communication system, many services are burst services. The terminal 100 does not need to keep connected to the BeiDou network device 200 at any time. The terminal 100 only needs to send a service request to the BeiDou network device 200 during communication, and the BeiDou network device 200 sends a service response to the terminal 100 based on the service request. If the BeiDou network device 200 is provided with an SLC layer retransmission mechanism, an operation burden is heavy, and a beneficial effect is not obvious. When the sending device is the BeiDou network device 200 and the receiving device is the terminal 100, after receiving the second ACK, the sending device does not retransmit the SLC PDU of the SLC SDU to the receiving device. Optionally, the sending device may further stop sending the SLC SDU to the BeiDou network device 200. In this way, the BeiDou network device 200 does not retransmit data at the SLC layer, so that limited transmission resources can be better saved.

Further, optionally, when the sending device is the BeiDou network device 200, and the receiving device is the terminal 100, in order to further save air interface resources of the BeiDou network device 200, the terminal 100 may not send an SLC layer feedback ACK (including the first ACK and the second ACK) to the BeiDou network device.

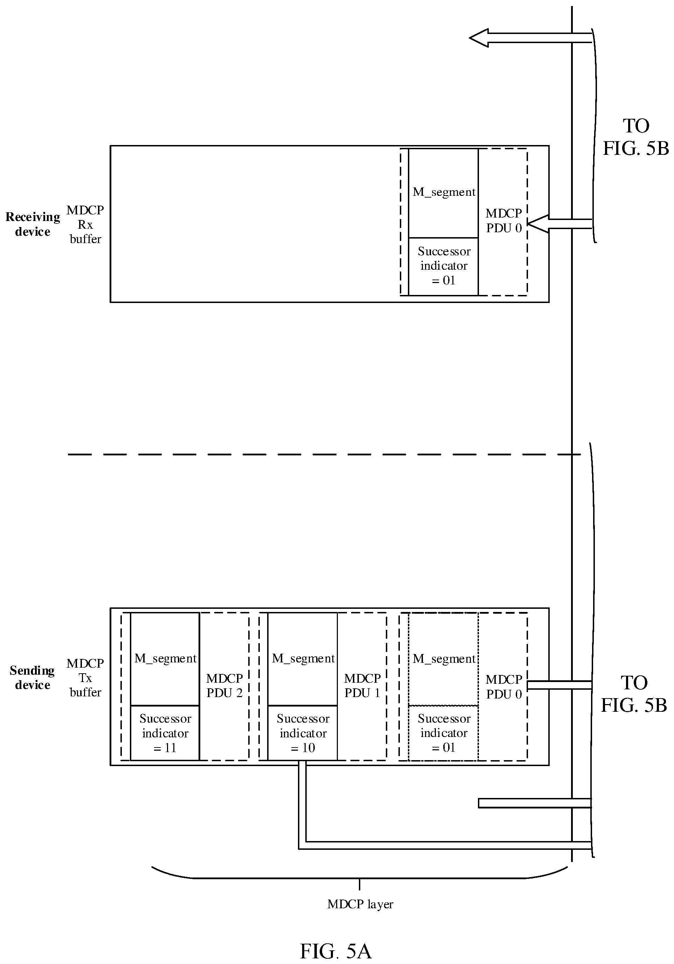

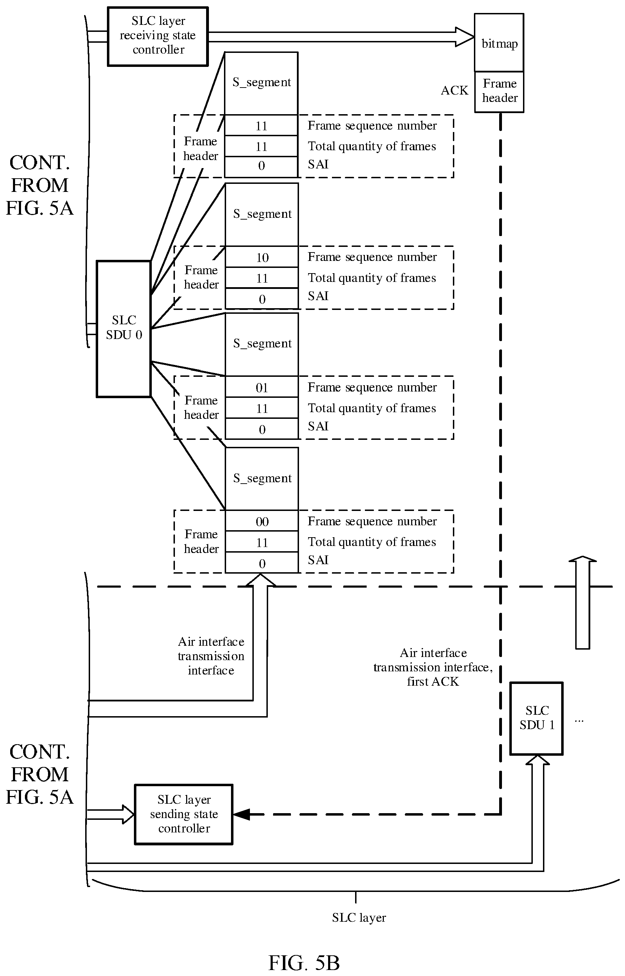

FIG. 5A and FIG. 5B are a schematic flowchart of protocol processing of data by an MDCP layer and an SLC layer of the BeiDou communication system 10 according to an embodiment of this application. In an inbound process, a sending device is the terminal 100, and a receiving device is the BeiDou network device 200. In an outbound process, the sending device is the BeiDou network device 200, and the receiving device is the terminal 100.
1. A process in which the sending device encapsulates a protocol of sent data at an MDCP layer.

As shown in FIG. 5A and FIG. 5B, at the MDCP layer, the sending device may segment an MDCP SDU into one or more pieces of MDCP segment data (M_segment) with a fixed length, and add a successor indicator field to a header of each piece of MDCP segment data, to obtain an MDCP PDU, that is, the MDCP PDU includes the M_segment and the successor indicator field.

It should be noted that, in the inbound process, first, the sending device may add padding (padding) data and a redundancy length indicator field to the MDCP SDU. Then, the sending device may segment the MDCP SDU to which the padding data and the redundancy length indicator field are added into one or more pieces of MDCP segment data with a fixed length, and add a successor indicator field to a header of each piece of MDCP segment data to obtain an MDCP PDU.

It should be noted that, in the outbound process, the sending device may directly segment the MDCP SDU into one or more pieces of MDCP segment data with a fixed length, and add a successor indicator field to a header of each piece of MDCP segment data to obtain an MDCP PDU.

The sending device may store, into an MDCP-layer sending buffer (MDCP Tx buffer) in a sequence from a higher bit to a lower bit, the MDCP PDU obtained through segmenting.

A data length of the successor indicator field may occupy 2 bits (bits). Meanings of values of the successor indicator field may be as follows:
01 indicates that the MDCP PDU is a starting MDCP PDU among a plurality of MDCP PDUs of the MDCP SDU;
10 indicates that the MDCP PDU is an intermediate MDCP PDU among the plurality of MDCP PDUs of the MDCP SDU, namely, an MDCP PDU other than the starting MDCP PDU and a last MDCP PDU in the MDCP SDU;
11 indicates that the MDCP PDU is the last MDCP PDU among the plurality of MDCP PDUs of the MDCP SDU; and
00 indicates that the MDCP PDU is the only MDCP PDU in the MDCP SDU.

For example, as shown in FIG. 5A and FIG. 5B, the terminal 100 may segment an MDCP SDU into three MDCP PDUs. The three MDCP PDUs are sequentially an MDCP PDU 0, an MDCP PDU 1, and an MDCP PDU 2 in an order from a higher bit to a lower bit. Because the MDCP PDU 0 is a starting MDCP PDU in the current MDCP SDU, the terminal 100 may set a value of a successor indicator field in the MDCP PDU 0 to "01". Because the MDCP PDU 1 is an intermediate MDCP PDU in the current MDCP SDU, the terminal 100 may set a value of a successor indicator field in the MDCP PDU 1 to "10". The MDCP PDU 2 is a last MDCP PDU in the current MDCP SDU, and the terminal 100 may set a value of a successor indicator field in the MDCP PDU 2 to "11".

2. A process in which the sending device encapsulates a protocol of sent data at an SLC layer.

At the SLC layer, the sending device may control, at the SLC layer, an SLC PDU sending policy of the SLC layer by using an SLC layer sending state controller, including initial transmission and retransmission of the SLC PDU. The sending device may further control sending and retransmission of the SLC PDU based on a receiving feedback (for example, an ACK) sent by the receiving device. The sending device may obtain, through an inter-layer interface, the MDCP PDU delivered by the MDCP layer as an SLC SDU. Only after the sending device sends a previous SLC SDU to the receiving device and determines that the receiving device successfully receives the previous SLC SDU, the sending device obtains a next MDCP PDU from the MDCP layer as a next SLC SDU, and sends the next MDCP PDU to the receiving device.

For example, the sending device may deliver the MDCP PDU 0 in the MDCP PDU 0, the MDCP PDU 1, and the MDCP PDU 2 to the SLC layer. At the SLC layer, the sending device first obtains, through an inter-layer interface, the MDCP PDU0 delivered by the MDCP layer, and the sending device may send the MDCP PDU0 as a first SLC SDU (namely, an SLC SDU 0) of the SLC layer in the current packet transmission process to the receiving device. After the sending device determines that the receiving device has sent data of the SLC SDU 0 to the receiving device, the sending device may obtain the MDCP PDU 1 from the MDCP layer, and send the MDCP PDU 1 as a second SLC SDU (namely, an SLC SDU 1) in the current packet transmission process to the receiving device. After the sending device determines that the receiving device has sent data of the second SLC SDU to the receiving device, the sending device may obtain the MDCP PDU 2 from the MDCP layer, and send the MDCP PDU 2 as a last SLC SDU in the current packet transmission process to the receiving device.

Optionally, the sending device may deliver all MDCP PDUs of an MDCP SDU of the MDCP layer to the SLC layer as an SLC SDU of the SLC layer through the inter-layer interface. After sending a previous SLC SDU to the receiving device and determining that the receiving device successfully receives the previous SLC SDU, the sending device sends a next SLC SDU to the receiving device.

For example, the sending device may deliver the MDCP PDU 0, the MDCP PDU 1, and the MDCP PDU 2 to the SLC layer. At the SLC layer, the sending device first obtains, through the inter-layer interface, the MDCP PDU 0, the MDCP PDU 1, and the MDCP PDU 2 that are delivered by the MDCP layer, and the sending device may use the MDCP PDU 0 as a first SLC SDU (namely, an SLC SDU 0) of the SLC layer in the current packet transmission process, use the MDCP PDU 1 as a second SLC SDU (namely, an SLC SDU 1) of the SLC layer in the current packet transmission process, and use the MDCP PDU 2 as a third SLC SDU (namely, an SLC SDU 2) of the SLC layer in the current packet transmission process. After the sending device determines that the receiving device has sent data of the SLC SDU 0 to the receiving device, the sending device may send the SLC SDU 1 to the receiving device, and the rest may be deduced by analogy.

The foregoing example is merely used to explain this application and shall not be construed as a limitation.

At the SLC layer, the sending device may segment an SLC SDU into one or more pieces of SLC segment data (S_segment) with a fixed length, and add frame header information to a header of each piece of S_segment, to obtain an SLC PDU. The frame header information includes a SAI field, a total frame quantity field, and a frame sequence number field.

The SAI field may occupy 1 bit. A value of the SAI field may be "0" or "1". The sending device may determine whether the SLC PDU to be currently sent belongs to an SLC SDU that is not sent. If the SLC PDU to be currently sent belongs to the SLC SDU that is not sent, the sending device may set the value of the SAI field in the SLC PDU to be different from a value of a SAI field in an SLC PDU in a previous SLC SDU session (including an SLC SDU initial transmission session or an SLC SDU retransmission session). If the SLC PDU to be currently sent does not belong to the SLC SDU that is not sent, the sending device may set the value of the SAI field in the SLC PDU to be the same as the value of the SAI field in the SLC PDU in the previous SLC SDU session. When the value of the SAI field in the SLC PDU is the same as the value of the SAI field in the SLC PDU in the previous SLC SDU session, it indicates that the SLC PDU is retransmitted data.

For example, the sending device needs to transmit three SLC SDUs in an entire application layer packet transmission process. Each SLC SDU may include four SLC PDUs. Values of SAI fields of four SLC PDUs of a first SLC SDU (namely, an SLC SDU 0) may be all "0", and values of SAI fields of four SLC PDUs of a second SLC SDU (namely, an SLC SDU 1) may be all "1". Values of SAI fields in four SLC PDUs of a third SLC SDU may be all "0".

The foregoing example is merely used to explain this application and shall not be construed as a limitation.

3. A process in which the receiving device parses a protocol of received data at the SLC layer.

At the SLC layer, after receiving an SLC PDU of the sending device, the receiving device may determine, based on frame header information of the SLC PDU, whether all SLC PDUs of one SLC SDU are received.

If it is determined that all the SLC PDUs of the one SLC SDU are received, the receiving device may sequentially splice the received one or more SLC PDUs into one SLC SDU in ascending order of values of frame sequence number fields. Further, the receiving device may further send feedback information (for example, a first ACK) to the sending device. After receiving the feedback information, the sending device may determine, based on the feedback information, that the receiving device receives all the SLC PDUs.

If it is determined that not all SLC PDUs of the one SLC SDU are received, after an SLC layer receiving window ends, the receiving device may send feedback information (for example, a second ACK) to indicate the sending device to retransmit an SLC PDU that is not received. After splicing the SLC SDU, the receiving device may report the SLC SDU to the MDCP layer as an MDCP PDU through the inter-layer interface.

The receiving device may control, at the SLC layer, by using an SLC layer receiving state controller based on a SAI field in the SLC PDU, a sending policy of feedback information (for example, an ACK) of the SLC layer and splicing of the SLC PDU. Duration of the SLC layer receiving state controller is a maximum retransmission time period of an SLC PDU on the sending device.

For example, if a SAI value of a first SLC PDU received by the receiving device is "0", a total frame quantity value is "11", and a frame sequence number is "00", a SAI value of a second SLC PDU is "0", a total frame quantity value is "11", and a frame sequence number is "01", a SAI value of a third SLC PDU is "0", a total frame quantity value is "11", and a frame sequence number is "10", and a SAI value of a fourth SLC PDU is "0", a total frame quantity value is "11", and a frame sequence number is "11", the receiving device determines that all SLC PDUs of the first SLC SDU (namely, an SLC SDU 0) are received, and the receiving device may splice the four SLC PDUs into the SLC SDU 0 in ascending order of frame sequence numbers, and report the SLC SDU 0 to the MDCP layer as an MDCP PDU 0 of the MDCP layer. The receiving device may store the MDCP PDU 0 in an MDCP layer receiving buffer (MDCP Rx buffer). A value of a successor indicator field in the MDCP PDU 0 is "01".

Further, the SLC layer receiving state controller of the receiving device may send an ACK to the SLC layer sending state controller of the sending device.

In a possible implementation, an ACK frame may include frame header information and a bitmap (bitmap) field. The bitmap field may be used to feed back a status of receiving an SLC PDU by the receiving device. For example, a length of the bitmap field may be 1 bit, and a value of the bitmap may indicate whether all SLC PDUs of the SLC SDU are received. For example, when the value of the bitmap field is 0, the bitmap field may indicate that not all SLC PDUs of the SLC SDU are received. When the value of the bitmap field is 1, the bitmap field may indicate that all the SLC PDUs of the SLC SDU are received. Herein, the foregoing example is merely used to explain this application, and should not constitute a limitation.

For another example, the length of the bitmap field may be 4 bits, and each bit of the bitmap may mark whether an SLC PDU with a corresponding frame sequence number is received. A first bit of the bitmap may be used to mark a receiving status of a first SLC PDU (for example, with a frame sequence number 00), a second bit may be used to mark a receiving status of a second SLC PDU (for example, with a frame sequence number 01), and the rest may be deduced by analogy. When a value of a bit in the bitmap is 0, it indicates that the receiving device does not receive, in the receiving window, an SLC PDU corresponding to the bit. When a value of a bit in the bitmap is 1, it indicates that the receiving device has received, in the receiving window, an SLC PDU corresponding to the bit.

Here, because the receiving device receives all SLC PDUs of the SLC SDU 0, the value of the bitmap is 1111. After receiving the first ACK sent by the receiving device, the sending device determines, based on a value of a bitmap of the first ACK, that the receiving device has successfully received all the SLC PDUs of the SLC PDU 0, and starts to send an SLC SDU 1.

For another example, if a SAI value of a first SLC PDU received by the receiving device is "0", a total frame quantity value is "11", and a frame sequence number is "00", a SAI value of a second SLC PDU is "0", a total frame quantity value is "11", and a frame sequence number is "10", and a SAI value of a third SLC PDU is "0", a total frame quantity value is "11", and a frame sequence number is "11", the receiving device does not receive, within a receiving window time period, an SLC PDU whose SAI value is "0", total frame quantity value is "11", and frame sequence number is "01" in the SLC SDU 0, that is, does not receive a second SLC PDU (with a frame sequence number 01) in all the SLC PDUs of the SLC SDU 0. The SLC layer receiving state controller of the receiving device may send a second ACK to the SLC layer sending state controller of the sending device. A value of a bitmap field of the second ACK is 1011. After receiving the second ACK sent by the receiving device, the sending device determines, based on the value of the bitmap, that the receiving device does not receive the second SLC PDU of the SLC PDU 0, and retransmits the second SLC PDU of the SLC PDU 0.

4. A process in which the receiving device parses a protocol of received data at the MDCP layer.

At the MDCP layer, after receiving all MDCP PDUs of one MDCP SDU sent by the sending device, the receiving device may aggregate a plurality of MDCP PDUs in a receiving time sequence based on a successor indicator field in the MDCP PDU, to obtain the MDCP SDU.

For example, after the receiving device obtains, from the SLC layer, an MDCP PDU whose value of a successor indicator field is "11", the receiving device may extract all MDCP PDUs from the MDCP Rx buffer, and splice the MDCP PDUs based on values of successor indicator fields and a receiving time sequence, to obtain an MDCP SDU. The receiving device may report the MDCP SDU to the application layer through an inter-layer interface as an application layer packet.

It should be noted that in the inbound process, after performing splicing based on values of successor indicator fields and a receiving time sequence, the receiving device further needs to remove a redundancy indicator field and padding data, to obtain an MDCP SDU.

In this way, the sending device and the receiving device may ensure, by using an ACK, that no data at the SLC layer is lost.

However, if only an acknowledgment mechanism of the SLC layer is used, the sending device determines, based on the ACK, whether the SLC layer of the receiving device successfully receives all SLC PDUs of the application layer packet sent by the sending device, but this does not mean that the application layer of the receiving device can successfully parse the received application layer packet. In this way, whether the receiving device can obtain original data sent by the sending device cannot be reliably indicated (that is, the receiving device cannot obtain the original data of the application layer packet through parsing).

In other words, if when the sending device sends the data to the receiving device, the data is successfully sent at the SLC layer, but fails to be decrypted or decoded at the application layer, the receiving device cannot obtain the original data of the application layer packet through parsing, and the sending device cannot determine a parsing status of the receiving device. As a result, a user of the sending device considers that the user has sent a BeiDou short message to the receiving device, but the receiving device cannot obtain the original data that is successfully received. In addition, even if the receiving device cannot obtain the original data, an operator determines, based on the SLC layer, that the application layer packet is successfully sent/received, and charges the user a communication fee. This is unreasonable, causing poor user experience.

Even, in some emergencies, performing only SLC layer acknowledgment may further cause a serious consequence. For example, when the terminal 100 sends emergency rescue information to the BeiDou network device 200, the acknowledgment is performed only at the SLC layer. If an application layer decryption/decoding failure occurs, a user of the terminal 100 does not know the failure, and does not send a second piece of emergency rescue information. The BeiDou network device 200 cannot decode/decrypt a received application layer packet, and cannot send the rescue information in the application layer packet to the emergency rescue center 27. This delays rescue time.

Therefore, this application provides a method for transmitting an application layer receipt in a BeiDou communication system. After receiving an application layer packet sent by the sending device, the receiving device may parse the application layer packet, and obtain corresponding application layer receipt information based on a result obtained by parsing the application layer packet. The receiving device may send the application layer receipt information to the sending device, and the sending device may determine, based on the application layer receipt information, a status of parsing the application layer packet by the receiving device (for example, parsing succeeds or parsing fails). According to the method provided in embodiments of this application, a trusted packet transmission mechanism can be established, to ensure that the sending device can obtain the status of parsing the application layer packet by the receiving device.

Further, the sending device may further perform a corresponding operation based on the application layer receipt information. For example, if the application layer receipt information indicates that the receiving device successfully parses the application layer packet, the sending device ends this sending operation. If the application layer receipt information indicates that the receiving device fails to parse the application layer packet, the sending device may retransmit the application layer packet. In this way, transmission reliability of the BeiDou communication system can be further ensured.

The following specifically describes a transmission process of the method for transmitting an application layer receipt in a BeiDou communication system.

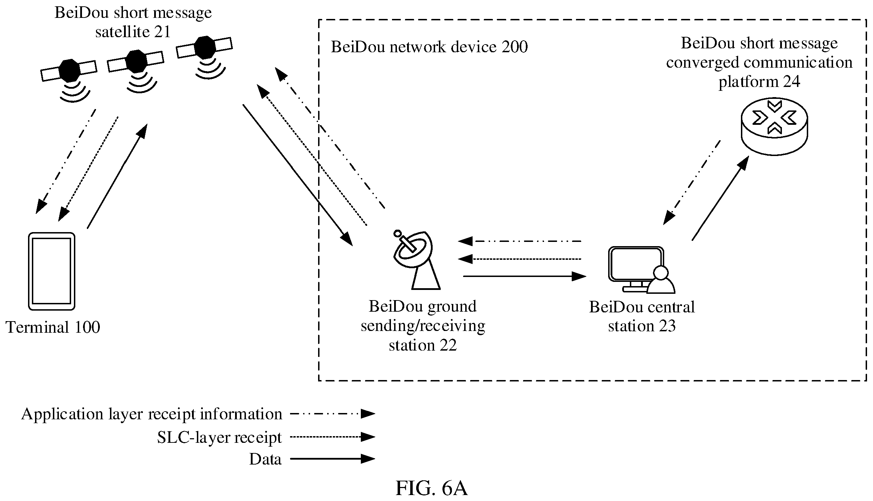

As shown in FIG. 6A, in an inbound process, the terminal 100 sends data to the BeiDou network device 200. Specifically, the terminal 100 may send the inbound data to the BeiDou ground sending/receiving station 22. The BeiDou ground sending/receiving station 22 may perform physical layer processing (for example, operations such as despreading, demodulation, pilot removal, and decoding) on the inbound data to obtain user frames, and send the user frames to the BeiDou central station 23. The BeiDou central station 23 may use the user frames as SLC PDUs, aggregate the SLC PDUs into an application layer packet, and report the application layer packet to the BeiDou short message converged communication platform 24. After receiving the SLC PDU sent by the terminal 100, the BeiDou central station 23 may return an acknowledgment character (ACK) of the SLC layer to the terminal 100. The ACK may indicate whether the BeiDou network device 200 successfully receives the SLC PDU sent by the terminal 100. The BeiDou short message converged communication platform 24 may parse the received application layer packet to obtain application layer parsing information. The application layer parsing information may indicate whether the BeiDou network device 200 successfully parses the application layer packet sent by the terminal 100.

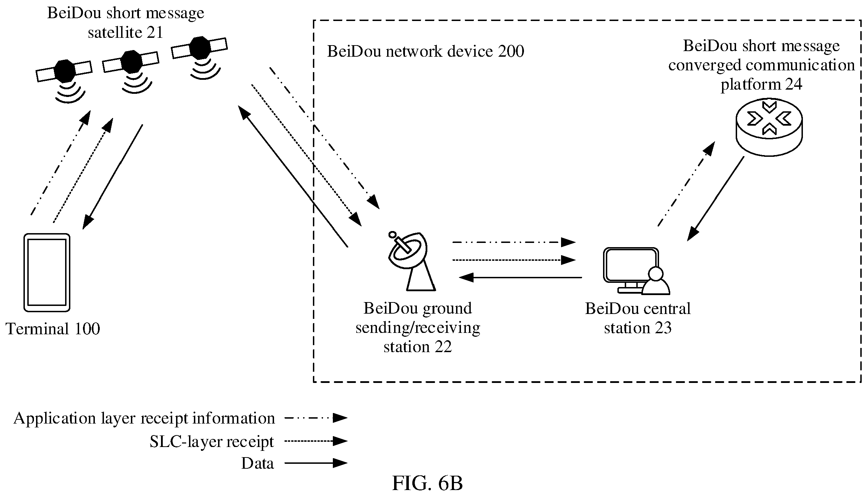

As shown in FIG. 6B, in an outbound process, the BeiDou network device 200 sends data to the terminal 100. Specifically, the BeiDou short message converged communication platform 24 sends an application layer packet to the BeiDou central station 23, and the BeiDou central station 23 may segment the application layer packet into a plurality of user frames and sequentially send the plurality of user frames to the BeiDou ground sending/receiving station 22. The BeiDou ground sending/receiving station 22 may splice the user frames into a physical frame, perform physical layer processing (for example, operations such as encoding, pilot insertion, modulation, and spreading) on the physical frame to obtain the outbound data, and send the outbound data to the terminal 100. After receiving the outbound data sent by the BeiDou network device 200, the terminal 100 may perform physical layer processing (for example, operations such as despreading, demodulation, pilot removal, and decoding) on the outbound data to obtain the physical frame. The terminal 100 may extract a user frame of the terminal 100 from the physical frame, and upload the user frame to the SLC layer as an SLC PDU. After receiving the SLC PDU, the terminal 100 may return an ACK of the SLC layer to the BeiDou network device 200. The ACK may indicate a status of receiving, by the terminal 100, the SLC PDU sent by the BeiDou network device 200. The terminal 100 may further aggregate the received SLC PDU into an application layer packet, and parse the obtained application layer packet. The terminal 100 may generate corresponding application layer receipt information based on a result obtained by parsing the application layer packet. The application layer receipt information may indicate whether the terminal 100 successfully parses the application layer packet sent by the BeiDou network device 200.

The following specifically describes a possible application layer receipt processing mechanism in the BeiDou communication system 10.

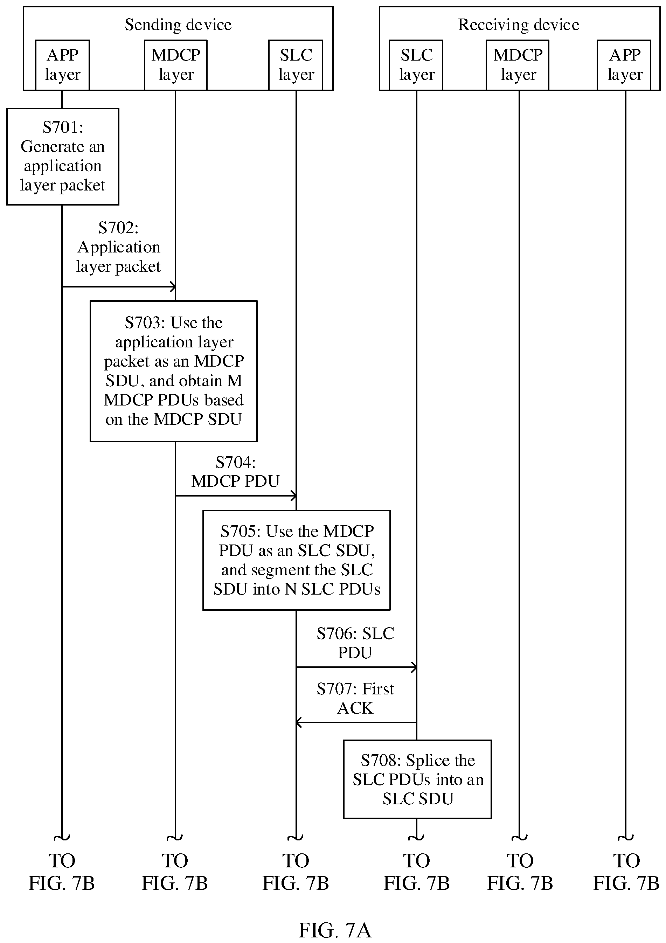

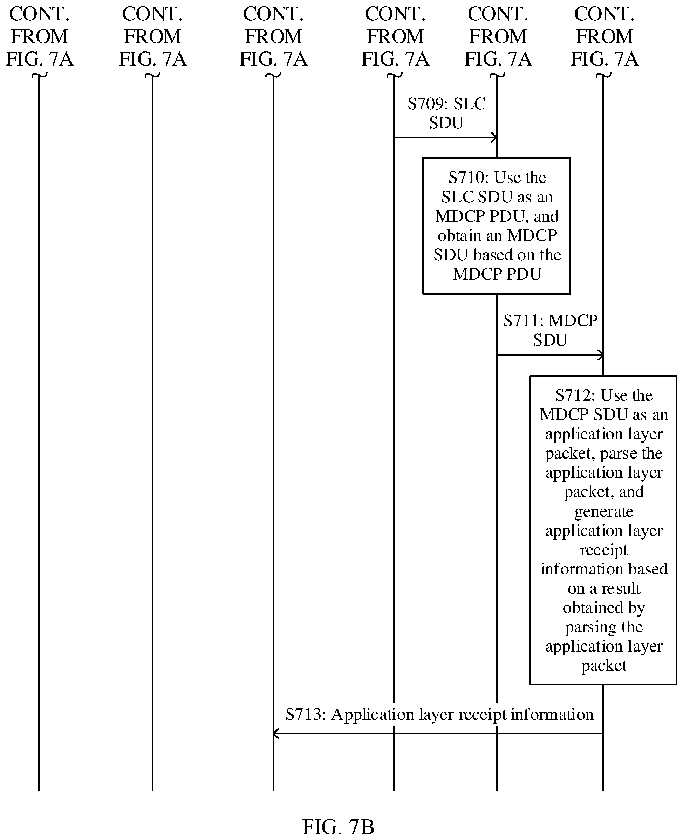

FIG. 7A and FIG. 7B show a possible application layer receipt processing mechanism between a sending device and a receiving device according to an embodiment of this application.

As shown in FIG. 7A and FIG. 7B, after receiving all SLC PDUs corresponding to an application layer packet sent by the sending device, the receiving device may send an ACK and application layer receipt information to the sending device. Specifically, an application layer receipt processing procedure is as follows:
S701: The sending device generates the application layer packet.

At an APP layer, the sending device may encode and compress original data to obtain compressed data, encrypt the compressed data to obtain encrypted data, and add packet header information to the encrypted data to obtain the application layer packet.

S702: The sending device delivers the application layer packet from the APP layer to an MDCP layer through an inter-layer interface.

S703: The sending device uses the application layer packet as an MDCP SDU, and obtains M MDCP PDUs based on the MDCP SDU.

At the MDCP layer, the sending device may use the application layer packet as the MDCP SDU, and segment the MDCP SDU into the M MDCP PDUs, where M is a positive integer. It should be noted that when the sending device is the terminal 100, the sending device needs to add padding data and a redundancy length indicator field to the MDCP SDU. Then, the MDCP SDU to which the padding data and the redundancy length indicator field are added is segmented into M MDCP PDUs.

S704: The sending device delivers the MDCP PDU from the MDCP layer to an SLC layer through an inter-layer interface.

S705: The sending device uses the MDCP PDU as an SLC SDU, and segments the SLC SDU into N SLC PDUs.

At the SLC layer, the sending device may use the MDCP PDU as the SLC SDU, and segments the SLC SDU into the SLC PDUs. For specific descriptions, refer to the embodiment in FIG. 5A and FIG. 5B. Details are not described herein again.

S706: The sending device sends the SLC PDU to the receiving device.

Specifically, the sending device may deliver the SLC PDU from the SLC layer to a PHY layer through an inter-layer interface.

At the PHY layer, the sending device may perform physical layer processing (for example, operations such as encoding, pilot insertion, modulation, and spreading) on the SLC PDU delivered by the SLC layer, and then forward an obtained SLC PDU to the receiving device. Herein, when the sending device is the terminal 100, for detailed descriptions of operations performed by the sending device at the PHY layer, refer to the embodiment inFIG. 2A-1 and FIG. 2A-2 . When the sending device is the BeiDou network device 200, for detailed descriptions of operations performed by the sending device at the PHY layer, refer to the embodiment in FIG. 3A-1 and FIG. 3A-2. Details are not described herein again.

After receiving, at a PHY layer, data sent by the sending device, the receiving device performs operations such as demodulation and decoding on the received data. Then, the receiving device may upload, to an SLC layer as an SLC PDU of the SLC layer, data obtained by performing physical layer processing (for example, operations such as despreading, demodulation, pilot removal, and decoding). When the receiving device is the BeiDou network device 200, for detailed descriptions of operations performed by the receiving device at the PHY layer, refer to the embodiment in FIG. 2B-1 and FIG. 2B-2. When the receiving device is the terminal 100, for detailed descriptions of operations performed by the receiving device at the PHY layer, refer to the embodiment in FIG. 3B-1 and FIG. 3B-2. Details are not described herein again.

S707: The sending device sends a first ACK to the receiving device.

At the SLC layer, the receiving device may return an ACK to the sending device based on frame header information of the SLC PDU.

If the receiving device determines, based on the frame header information, that not all SLC PDUs of an SLC SDU are received, the receiving device may send a second ACK to the sending device. The second ACK may indicate that the receiving device does not receive all the SLC PDUs of the SLC SDU, and the second ACK may further indicate a frame sequence number of an SLC PDU that is not received. After receiving the second ACK, the sending device may retransmit, to the receiving device, the SLC PDU that is not received and that is indicated by the second ACK.

If the receiving device determines, based on the frame header information, that all the SLC PDUs of the SLC SDU are received, the receiving device may send a first ACK to the sending device. The first ACK may indicate that the receiving device has received all the SLC PDUs of the SLC SDU. After receiving the first ACK, the sending device determines that the receiving device receives the SLC PDU of the SLC SDU. Herein, the following embodiment is described by using a case in which the receiving device receives all the SLC PDUs of the SLC SDU.

It should be noted that, if the sending device sends an SLC PDU of a non-last SLC SDU of the MDCP SDU, after receiving the first ACK, the sending device may continue to send an SLC PDU of a next SLC SDU of the MDCP SDU.

If the sending device sends an SLC PDU of a last SLC SDU of the MDCP SDU, the sending device may wait for the receiving device to send the application layer receipt information. The receiving device may send, to the sending device only after receiving all corresponding SLC PDUs of the last SLC SDU, the first ACK indicating that all the SLC PDUs are received. In addition, the receiving device can start to parse an application layer packet only after splicing all SLC PDUs corresponding to the MDCP SDU to obtain the application layer packet, and return corresponding application layer receipt information based on a result obtained by parsing the application layer packet. Therefore, time at which the sending device receives the first ACK is earlier than time at which the sending device receives the application layer receipt information.

S708: The receiving device splices the SLC PDUs into an SLC SDU.

Specifically, for detailed descriptions of splicing the SLC PDUs by the receiving device, refer to the embodiment shown in FIG. 5A and FIG. 5B. Details are not described herein again.

S709: The receiving device uploads the SLC SDU from the SLC layer to an MDCP layer through an inter-layer interface.

S710: The receiving device may use the SLC SDU as an MDCP PDU, and obtain an MDCP SDU based on the MDCP PDU.

At the MDCP layer, after determining, based on a successor indicator field, that all MDCP PDUs of the MDCP SDU are received, the receiving device may splice the MDCP PDUs into the MDCP SDU in a receiving sequence.

S711: The receiving device uploads the MDCP SDU from the MDCP layer to an APP layer through an inter-layer interface.

S712: The receiving device uses the MDCP SDU as an application layer packet, parses the application layer packet, and generates application layer receipt information based on a result obtained by parsing the application layer packet.

At the APP layer, the receiving device may use the MDCP SDU as the application layer packet, and parse the application layer packet. After parsing the application layer packet, the receiving device may generate the corresponding application layer receipt information based on the result obtained by parsing the application layer packet.

Specifically, when the receiving device fails to parse the application layer packet, the receiving device may generate application layer receipt information indicating that parsing fails. When the receiving device fails to parse the application layer packet, the receiving device may generate application layer receipt information indicating that parsing succeeds.

For example, the application layer receipt information may be an error code. A length of the error code may be 1 bit. When a value of the error code is 0, the error code may indicate that the receiving device fails to parse the application layer packet. When the value of the error code is 1, the error code may indicate that the receiving device successfully parses the application layer packet. It should be noted that the values of the error code and their meanings are merely examples.

S713: The receiving device sends the application layer receipt information to the sending device.

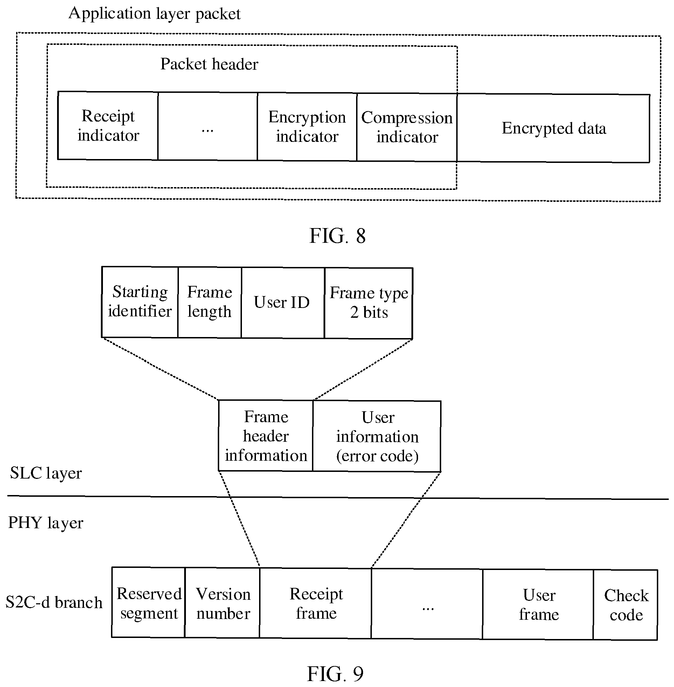

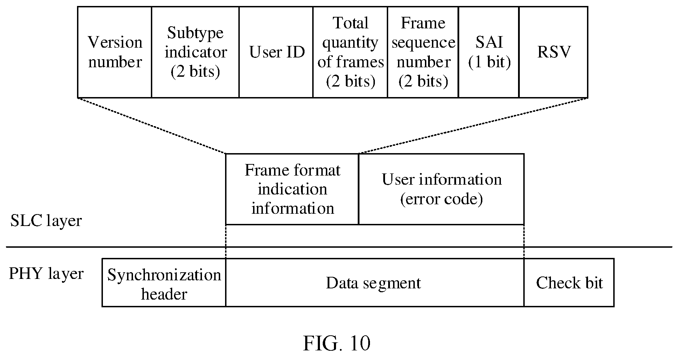

The receiving device may encapsulate the application layer receipt information into a receipt frame, and send the receipt frame to the sending device. For detailed descriptions of obtaining the receipt frame by the receiving device and obtaining the application layer receipt information by the sending device, refer to embodiments shown in FIG. 9 and FIG. 10. Alternatively, the receiving device may encapsulate the application layer receipt information into an application layer receipt packet, and send the application layer receipt packet to the sending device. For detailed descriptions of obtaining the application layer receipt packet by the receiving device and obtaining the application layer receipt information by the sending device, refer to subsequent embodiments. Details are not described herein.

The sending device may determine, at the APP layer based on the received application layer receipt information, the result obtained by parsing the application layer packet by the receiving device.

Further, the sending device may further perform a corresponding operation based on the result obtained by parsing the application layer packet by the receiving device in the application layer receipt information. For example, if the application layer receipt information indicates that the receiving device successfully parses the application layer packet, the sending device ends this sending operation or sends a next application layer packet. If the application layer receipt information indicates that the receiving device fails to parse the application layer packet, the sending device may retransmit the application layer packet. In this way, transmission reliability of the BeiDou communication system can be further ensured.

In a possible implementation, the application layer receipt information may not only indicate whether the receiving device successfully parses the application layer packet. In addition, when the receiving device fails to parse the application layer packet, the application layer receipt information may further indicate a reason why the receiving device fails to parse the application layer packet. In this way, the sending device may obtain, from the application layer receipt information, a result of whether the receiving device successfully parses the application layer packet, and a reason why parsing fails when parsing fails.

Specifically, after parsing the application layer packet, the receiving device may determine a code (also referred to as an error code) corresponding to the result obtained by parsing the application layer packet. The error code is the application layer receipt information of the receiving device.

For example, a length of the error code may be 4 bits. When a value of the error code is 0000, the error code may indicate that the receiving device successfully parses the application layer packet. When the value of the error code is 0001, the error code may indicate that the receiving device fails to parse the application layer packet, and a failure cause is a decryption error. When the value of the error code is 0010, the error code may indicate that the receiving device fails to parse the application layer packet, and the failure cause is a decoding error. The rest may be deduced by analogy.

It should be noted that, when the receiving device cannot obtain the compressed data through decryption based on the encrypted data, the receiving device may determine that the result obtained by parsing the application layer packet is a decryption error. When the receiving device cannot decompress and decode the compressed data to obtain the original data, the receiving device may determine that the result obtained by parsing the application layer packet is a decoding error. When the receiving device successfully parses the application layer packet to obtain the original data, the receiving device determines that the result obtained by parsing the application layer packet is that parsing succeeds.

Specifically, the receiving device may parse the application layer packet at the application layer, and after obtaining the result by parsing the application layer packet, deliver an error code corresponding to the result to the SLC layer through the inter-layer interface. The receiving device may add frame header information to a header of the error code to obtain an SLC layer receipt frame (which is also referred to as an application layer receipt). The receipt frame includes application layer receipt information (namely, the error code). The receiving device may send the receipt frame to the sending device.

After receiving the receipt frame, the sending device may determine, based on the error code in the receipt frame, a status of parsing the application layer packet by the receiving device.

Further, after receiving the receipt frame, the sending device may further perform a corresponding operation based on the error code in the receipt frame.

If the error code indicates that the receiving device successfully parses the application layer packet, the sending device may end this sending operation.

If the error code indicates that the receiving device fails to parse the application layer packet and the failure cause is a decryption error, the sending device may determine that a cause of the decryption error of the receiving device is that key information of the sending device is different from key information of the receiving device. After receiving the receipt frame, the sending device may negotiate with the receiving device to update key information (including a key and a password book).

Specifically, after returning to a cellular network, the sending device and the receiving device may negotiate the key by using a cellular network device. After the sending device and the receiving device negotiate the key information, the key information of the sending device is changed to the key information of the receiving device. The sending device may re-encrypt and re-compress the data based on the changed key information, to obtain encrypted data. Then, the sending device sends, to the receiving device, an application layer packet including the encrypted data.

Alternatively, if the key information of the receiving device is changed to the key information of the sending device after the sending device and the receiving device negotiate the key information, the receiving device may re-decrypt the encrypted data of the application layer packet based on the changed key information.

If the error code indicates that the receiving device fails to parse the application layer packet and the failure cause is a decoding error, the sending device may determine that a cause of the decoding error is that an encoding and compression algorithm of the sending device is different from an encoding and compression algorithm of the receiving device, and the sending device and the receiving device may negotiate an encoding and compression algorithm.

Specifically, after returning to the cellular network, the sending device and the receiving device may negotiate the encoding and encryption algorithm by using a cellular network device. After the sending device and the receiving device negotiate the encoding and compression algorithm, the encoding and compression algorithm of the sending device is changed to the encoding and compression algorithm of the receiving device. The sending device may re-encode and re-compress the original data based on the changed encoding and compression algorithm, to obtain compressed data. The sending device encrypts the compressed data to obtain encrypted data, and then sends an application layer packet including the encrypted data to the receiving device.

Alternatively, after the sending device and the receiving device negotiate the encoding and compression algorithm, if the encoding and compression algorithm of the receiving device is changed to the encoding and compression algorithm of the sending device, the receiving device may re-decode the compressed data based on the changed encoding and compression algorithm.

In some embodiments, both the sending device and the receiving device store codebooks, and the codebooks include encoding and compression algorithms used by the sending device and the receiving device. When a codebook of the sending device is the same as a codebook of the receiving device, the receiving device may successfully decode the compressed data to obtain the original data. When the codebook of the sending device is different from the codebook of the receiving device, the receiving device cannot decode the compressed data to obtain the original data.

In a possible implementation, the sending device may display prompt information 1 when determining, based on the application layer receipt information, that the receiving device successfully parses the application layer packet. The prompt information 1 may be used to give a prompt that a message is successfully sent. The sending device may display prompt information 2 when determining, based on the application layer receipt information, that the receiving device fails to parse the application layer packet. The prompt information 2 may be used to give a prompt that a message fails to be sent.

Optionally, the sending device may display prompt information 3 when determining, based on the application layer receipt information, that the receiving device fails to parse the application layer packet and a failure cause is a decryption failure. The prompt information 3 may indicate that the message fails to be sent due to an incorrect key. Further, the prompt information 3 may prompt a user of the sending device to return to the cellular network to update the key, and then send a BeiDou short message.

The sending device may display prompt information 4 when determining, based on the application layer receipt information, that the receiving device fails to parse the application layer packet and the failure cause is a decoding failure. The prompt information 4 may indicate that a message fails to be sent because an encoding and encryption algorithm error occurs. Further, the prompt information 3 may prompt the user of the sending device to return to the cellular network to update an encoding and encryption mode, and then send a BeiDou short message.

In a possible implementation, the receiving device may be preset to return only an ACK of the SLC layer after receiving all SLC PDUs of a last SLC SDU corresponding to the application layer packet of the sending device. Alternatively, the receiving device may be preset to return both an ACK of the SLC layer and application layer receipt information. Alternatively, the receiving device may be preset to return only application layer receipt information.

In a possible implementation, the sending device may add a receipt indicator field to a packet header of the application layer packet. The sending device may indicate, based on the receipt indicator field, the receiving device whether to return the application layer receipt information. In this way, the BeiDou communication system can ensure transmission reliability when a result obtained by parsing the application layer packet by the receiving device needs to be determined. In a case in which the result obtained by parsing the application layer packet by the receiving device does not need to be determined, air interface transmission resources are reduced.

For example, at the APP layer, the sending device may perform operations such as encoding, compression, and encryption on original data to obtain encrypted data, and add packet header information to the encrypted data to obtain an application layer packet. For a specific format of the application layer packet, refer to FIG. 8.

For example, FIG. 8 shows an example of an application layer packet of a sending device. In an example of the application layer packet shown in FIG. 8, the application layer packet includes a packet header and encrypted data. The decrypted data may be obtained by compressing and encrypting the original data. Information about the packet header may include but is not limited to a receipt indicator field, an encryption indicator field, and a compression indicator field. For detailed descriptions of the encryption indicator field and the compression indicator field, refer to the embodiment inFIG. 2A-1 and FIG. 2A-2 . Details are not described herein again. The receipt indicator field may indicate whether the receiving device needs to return application layer receipt information.

For example, a length of the receipt indicator field may be 1 bit. When a value of the receipt indicator field is 0, the receipt indicator field may indicate the receiving device not to return the application layer receipt information. When the value of the receipt indicator field is 1, the receipt indicator field may indicate the receiving device to return the application layer receipt information.

At an MDCP layer, the sending device may use the obtained application layer packet delivered by the APP layer as an MDCP SDU. The sending device may segment the MDCP SDU into one or more pieces of MDCP segment data with a fixed length. The sending device may add a successor indicator field to a header of each piece of MDCP segment data, to obtain an MDCP PDU. The successor indicator field may indicate a sequence of the current MDCP PDU in a same MDCP SDU. It should be noted that when the sending device is the terminal 100, the sending device may add padding data and a redundancy length indicator field to the MDCP SDU. The MDCP SDU to which the padding data and the redundancy length indicator field are added is segmented into one or more pieces of MDCP segment data with a fixed length.

At an SLC layer, the sending device may segment the MDCP PDU as an SLC SDU into SLC PDUs.

At a PHY layer, the sending device may perform physical layer processing (for example, operations such as encoding, pilot insertion, modulation, and spreading) on the SLC PDU to obtain a physical frame, and send the physical frame to the receiving device.

At a PHY layer, after receiving the physical frame, the receiving device may perform physical layer processing (for example, operations such as despreading, demodulation, pilot removal, and decoding) on the physical frame, and then upload the physical frame to an SLC layer.

At the SLC layer, the receiving device may feed back an ACK to the sending device based on a receiving status of the SLC PDU. After receiving all SLC PDUs corresponding to the SLC SDU, the receiving device may frame the SLC PDUs to obtain an SLC SDU. For a specific procedure of feeding back the ACK by the receiving device, refer to the foregoing embodiment. Details are not described herein again.

The receiving device may upload the SLC SDU to an MDCP layer as an MDCP PDU. After determining, based on the successor indicator field, that all MDCP PDUs of the MDCP SDU are received, the receiving device may splice the MDCP PDUs into an MDCP SDU in a receiving sequence, and upload the MDCP SDU to an APP layer.

At the APP layer, the receiving device may use the MDCP SDU as an application layer packet, and parse the application layer packet. First, the receiving device may determine, based on a receipt indicator field, whether to return application layer receipt information. If the receiving device determines, based on the receipt indicator field, not to return application layer receipt information, the receiving device directly parses the application layer packet.

If the receiving device determines, based on the receipt indicator field, to return application layer receipt information, the receiving device may generate, after parsing the application layer packet, corresponding application layer receipt information based on a result obtained by parsing the application layer packet. After generating the application layer receipt information, the receiving device may send the application layer receipt information to the sending device.

In some possible embodiments, the receiving device may parse the receipt indicator field at the MDCP layer, and determine whether to return application layer receipt information based on a value of the receipt indicator field. It should be noted that, in descriptions of the following embodiment, the application layer receipt information may be encapsulated into a receipt frame at the SLC layer. That is, that the receipt indicator field may indicate whether the receiving device returns application layer receipt information may be expressed as that the receipt indicator field may indicate whether the receiving device returns a receipt frame.

For example, after determining, based on the successor indicator field, that all the MDCP PDUs of the MDCP SDU are received, the receiving device may splice the MDCP PDUs into the MDCP SDU in the receiving sequence. Then, the receiving device may determine, based on the receipt indicator field, whether to return a receipt frame.

When the receiving device determines not to return a receipt frame (for example, a value of the receipt indicator field is 0), the receiving device uploads the MDCP SDU to the APP layer. At the APP layer, the receiving device may use the MDCP SDU as an application layer packet and parse the application layer packet.

When the receiving device determines to return a receipt frame (for example, the value of the receipt indicator field is 1), the receiving device may directly upload the MDCP SDU to the APP layer, use the MDCP SDU as an application layer packet, and parse the application layer packet. The receiving device may further indicate the APP layer to generate application layer receipt information. After parsing the application layer packet, the receiving device may generate corresponding application layer receipt information based on a result obtained by parsing the application layer packet. The receiving device may encapsulate the application layer receipt information into a receipt frame, and send the receipt frame to the sending device. The sending device may determine, based on the application layer receipt information, the result obtained by parsing the application layer packet by the receiving device. Further, the sending device may perform a corresponding operation based on the application layer receipt information. For details, refer to the embodiment in FIG. 7A and FIG. 7B. Details are not described herein again.

When the receiving device is the BeiDou network device 200, for specific descriptions of the receipt frame, refer to the embodiment in FIG. 9.

The following describes an example in which the BeiDou network device 200 sends a receipt frame according to an embodiment of this application.

As shown in FIG. 9, first, the BeiDou network device 200 may generate the receipt frame at an SLC layer. Specifically, the BeiDou network device 200 may deliver, to the SLC layer, application layer receipt information corresponding to a result obtained by parsing an application layer packet. The application layer receipt information may be a notification message, and the BeiDou network device 200 may generate, at the SLC layer based on the notification message, the receipt frame corresponding to the result obtained by parsing the application layer packet.

Alternatively, the application layer receipt information may be an error code. At the SLC layer, the BeiDou network device 200 may write the application layer receipt frame information into user information.

For example, a length of the error code may be 4 bits, and each error code corresponds to a result obtained by parsing the application layer packet. For example, meanings of some values of the error code may be as follows:
0000 indicates that the BeiDou network device 200 successfully parses the application layer packet.
0001 indicates that the BeiDou network device 200 fails to parse the application layer packet because of a decryption error.
0010 indicates that the BeiDou network device 200 fails to parse the application layer packet because of a decoding error.

Then, the BeiDou network device 200 may add frame header information in front of the user information, to obtain the receipt frame. The frame header information may include but is not limited to a starting identifier field, a frame length field, a user identity (identity, ID) field, and a frame type field.

The starting identifier field may be used to identify a starting location of a new user frame of the BeiDou network device 200.

The frame length field may be used to identify a length of a user frame.

The user ID field may be used to identify a device (for example, the terminal 100) that receives an application layer receipt. The terminal 100 may extract a user frame belonging to the terminal 100 from outbound data based on a value of the user ID field.

The frame type field may be used to identify a type of a user frame. For example, a length of the frame type field may be 2 bits. When a value of the frame type field is 00, the frame type field may identify that the current user frame is a general data frame. The general data frame may be used to transmit original data. When the value of the frame type field is 01, the frame type field may identify that the current user frame is an ACK frame. The ACK frame may be used to determine a transmission status of an SLC PDU at the SLC layer. When the value of the frame type field is 10, the frame type field may identify that the current user frame is a receipt frame. The receipt frame may be used to determine an application layer packet parsing status of an application layer. Herein, the user frame sent by the BeiDou network device 200 to the terminal 100 is a receipt frame. Therefore, the value of the frame type field may be 10.

Then, the BeiDou network device 200 may splice the receipt frame and another user frame, and add a version number field to headers of a plurality of user frames. The version number field may indicate a version of a BeiDou short message protocol. The BeiDou network device 100 may further add a check code (for example, a cyclic redundancy check (cyclic redundancy check, CRC) code) to a tail of the plurality of user frames, to obtain a physical frame. The BeiDou network device 200 may perform physical layer processing (for example, operations such as encoding, pilot insertion, modulation, and spreading) on the physical frame, and add a reserved segment to the physical frame to form encoded data of an S2C-d branch of a fixed-length physical timeslot. Then, the BeiDou network device 200 may synchronously send the encoded data of the S2C-d branch and a secondary code of an S2C-p branch to the BeiDou short message satellite 21, and the BeiDou short message satellite 21 relays and forwards the encoded data of the S2C-d branch and the secondary code of the S2C-p branch to one or more terminals (including the terminal 100).

In embodiments of this application, the foregoing receipt frame processing mechanism is merely an example for description, and a specific operation of the receipt frame processing mechanism is not limited in this application.

Then, the terminal 100 may capture the encoded data of the S2C-d branch based on the secondary code of the S2C-p branch sent by the BeiDou network device 200. After capturing the encoded data of the S2C-d branch, the terminal 100 may perform physical layer processing (for example, operations such as despreading, demodulation, pilot removal, and decoding) on the encoded data of the S2C-d branch to obtain a physical frame. A user frame whose value of a user ID field is the same as a value of a user ID of the terminal 100 is extracted from the physical frame.

When the terminal 100 learns, based on a frame type field in frame header information, that a type of the user frame is a receipt frame, the terminal 100 may upload, at an SLC layer, an error code in the receipt frame to an APP layer through an inter-layer interface, and obtain, at the APP layer based on the error code in user information, a result obtained by parsing the application layer packet by the BeiDou network device 200. Further, the terminal 100 may perform corresponding operations for different results. Specifically, for detailed descriptions of operations performed by the terminal 100, refer to the embodiment in FIG. 7A and FIG. 7B. Details are not described herein again.

When the receiving device is the terminal 100, for specific descriptions of the receipt frame, refer to the embodiment in FIG. 10.

The following describes an example in which the terminal 100 sends a receipt frame according to an embodiment of this application.

As shown in FIG. 10, first, the terminal 100 may deliver a result obtained by parsing an application layer packet to an SLC layer. At the SLC layer, the terminal 100 may write, into user information, application layer receipt information corresponding to the result obtained by parsing the application layer packet. The application layer receipt information may be an error code. The error code may indicate a result obtained by parsing the application layer packet by the terminal 100. For detailed descriptions of the error code, refer to the embodiment in FIG. 9. Details are not described herein again.

Then, the terminal 100 may add frame header information in front of the user information to obtain a receipt frame. The frame header information may include but is not limited to a version number field, a subtype indicator field, a user ID field, a total frame quantity field, a frame sequence number field, a SAI field, and a reserved domain (reserved, RSV) field.

For text descriptions of the SAI field, the total frame quantity field, and the frame sequence number field, refer to the embodiment inFIG. 2A-1 and FIG. 2A-2 . Details are not described herein again.

The version number field may be used to identify a version of a BeiDou short message protocol.

The subtype indicator field may be used to identify a type of a user frame. For example, a length of the subtype indicator field may be 2 bits. When a value of the subtype indicator field is 00, the subtype indicator field may identify that the current user frame is a general data frame. The general data frame may include but is not limited to an emergency rescue frame, a location report frame, and a packet communication frame. When the value of the subtype indicator field is 01, the subtype indicator field may identify that the current user frame is an ACK frame. When the value of the subtype indicator field is 10, the subtype indicator field may identify that the current user frame is a receipt frame. Herein, the BeiDou network device 200 sends the receipt frame to the terminal 100. Therefore, the value of the subtype indicator field may be 10.

The user ID field may be used to identify a device (the terminal 100) that receives an application layer receipt.

The reserved domain field may be used for another field in a subsequent BeiDou communication system. This is not limited herein.

Then, the terminal 100 may deliver the receipt frame to a PHY layer. At the PHY layer, the terminal 100 may use the receipt frame as a data segment, add a synchronization header and a check bit to the data segment to obtain a corresponding physical frame, and send the physical frame to the BeiDou short message satellite 21, and the BeiDou short message satellite 21 relays and forwards the physical frame to the BeiDou network device 200.

After receiving the physical frame, the BeiDou network device 200 may obtain the user frame by performing physical layer processing (for example, operations such as despreading, demodulation, pilot removal, and decoding), and upload the user frame to an SLC layer. After the BeiDou network device 200 may determine, at the SLC layer based on the value of the subtype indicator field, that the user frame is the receipt frame, the BeiDou network device 200 may upload an error code of the receipt frame to an APP layer through an inter-layer interface. The BeiDou network device 200 may obtain, at the APP layer based on the error code of the receipt frame, the result obtained by parsing the application layer packet by the terminal 100.

Further, the BeiDou network device 200 may further perform a corresponding operation based on the result obtained by parsing the application layer packet by the terminal 100. For details, refer to the embodiment in FIG. 7A and FIG. 7B. Details are not described herein again.

In embodiments of this application, the foregoing receipt frame processing mechanism is merely an example for description, and a specific operation of the receipt frame processing mechanism is not limited in this application.

In a possible implementation, a receiving device may encapsulate application layer receipt information into an application layer receipt packet at an APP layer, and then the receiving device may send the application layer receipt packet to a sending device. In this way, an application layer receipt packet may be obtained based on an application layer packet sending mechanism. This reduces changes to a processing mechanism of the BeiDou communication system.

Specifically, the receiving device may use the application layer receipt information as the foregoing original data. First, the receiving device may encode and compress the application layer receipt information to obtain compressed data, and then encrypt the compressed data to obtain encrypted data. Then, the receiving device may add packet header information in front of the encrypted data, to obtain the application layer receipt packet.

The packet header information may include but is not limited to an encryption indicator field, a compression indicator field, and a receipt identifier field. For descriptions of the encryption indicator field and the compression indicator field, refer to the embodiment in FIG. 3A-1 and FIG. 3A-2. Details are not described herein again. The receipt identifier field may indicate whether the application layer packet includes the application layer receipt information.

For example, a length of the receipt identifier field may be 1 bit. When a value of the receipt identifier field is 1, the application layer packet includes the application layer receipt information. It should be noted that the application layer packet including the application layer receipt information may be referred to as an application layer receipt packet for short. When the value of the receipt identifier field is 0, the application layer packet does not include the application layer receipt information.

It should be noted that a procedure in which the receiving device generates the application layer receipt packet and sends the application layer receipt packet to the sending device is the same as a procedure in which the sending device generates and sends the application layer packet. For specific descriptions, refer to the embodiment in FIG. 2A-1 and FIG. 2A-2 or FIG. 3A-1 and FIG. 3A-2. Details are not described herein again. A procedure in which the sending device obtains original data of the application layer receipt packet is the same as the procedure in which the receiving device obtains the original data of the application layer packet. For specific descriptions, refer to the embodiment in FIG. 2B-1 and FIG. 2B-2 or FIG. 3B-1 and FIG. 3B-2.

After obtaining the application layer packet, the sending device may determine, based on the value of the receipt identifier field, whether the application layer packet is an application layer receipt packet. When the sending device determines that the receipt identifier field indicates that the application layer packet is the application layer receipt packet, the sending device may determine, based on the original data (namely, application layer receipt information), the result obtained by parsing the application layer packet by the receiving device. For specific descriptions, refer to the embodiment shown in FIG. 7A and FIG. 7B. Details are not described herein again.

Optionally, the receiving device may not compress or encrypt the original data, but directly add the packet header information in front of the application layer receipt information, to obtain the application layer receipt packet. The receiving device may set a value of a compression indicator field in the packet header information to not using a compression algorithm, and may set a value of the encryption indicator field in the packet header information to not using an encryption algorithm.

Further, optionally, the packet header information of the application layer receipt packet may not include the compression indicator field or the encryption indicator field.

The following specifically describes an application layer receipt processing mechanism in the BeiDou communication system 10.

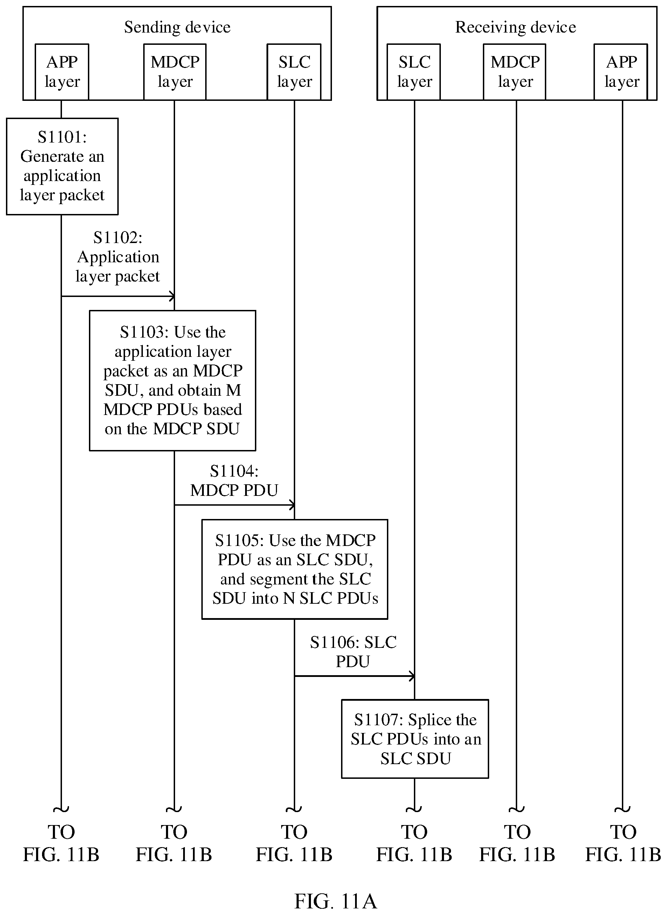

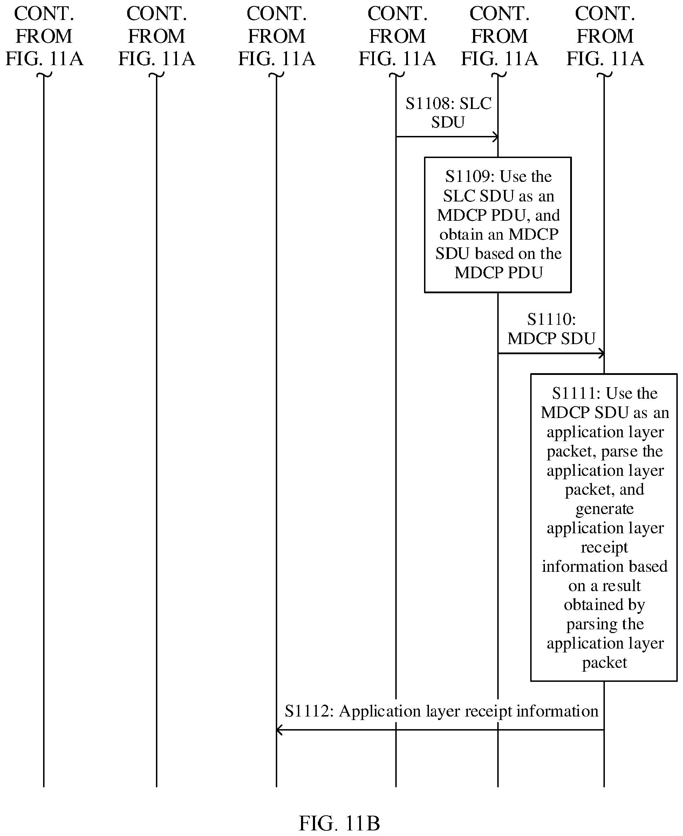

FIG. 11A and FIG. 11B show another possible application layer receipt processing mechanism between a sending device and a receiving device according to an embodiment of this application.

As shown in FIG. 11A and FIG. 11B, after receiving an SLC PDU of a last SLC SDU corresponding to an application layer packet sent by the sending device, the receiving device may not send an ACK of an SLC layer, but send only application layer receipt information to the sending device. In this way, when the sending device receives the application layer receipt information, it may be proved that the receiving device receives all SLC PDUs of the SLC SDU, and the receiving device may no longer send the ACK of the SLC PDU of the last SLC SDU. This helps reduce air interface resources of the receiving device.

S1101: The sending device generates the application layer packet.

S1102: The sending device delivers the application layer packet from an APP layer to an MDCP layer through an inter-layer interface.

S1103: The sending device uses the application layer packet as an MDCP SDU, and obtains M MDCP PDUs based on the MDCP SDU.

S1104: The sending device delivers the MDCP PDU from the MDCP layer to an SLC layer through an inter-layer interface.

S1105: The sending device uses the MDCP PDU as an SLC SDU, and segments the SLC SDU into N SLC PDUs.

S1106: The sending device sends the SLC PDU to the receiving device.

For detailed descriptions of step S1101 to step S1106, refer to the embodiment in FIG. 7A and FIG. 7B. Details are not described herein again.

S1107: The receiving device splices the SLC PDUs into an SLC SDU.

S1108: The receiving device uploads the SLC SDU from the SLC layer to an MDCP layer through an inter-layer interface.

S1109: The receiving device may use the SLC SDU as an MDCP PDU, and obtain an MDCP SDU based on the MDCP PDU.

S1110: The receiving device may upload the MDCP SDU from the MDCP layer to an APP layer through an inter-layer interface.

At the SLC layer, after receiving the SLC PDU of the SLC SDU, the receiving device may return an ACK to the sending device based on frame header information of the SLC PDU. If the receiving device determines, based on the frame header information, that not all SLC PDUs of the SLC SDU are received, the receiving device may send a second ACK to the sending device. The second ACK may indicate that the receiving device does not receive all the SLC PDUs of the SLC SDU, and the second ACK may further indicate a frame sequence number of an SLC PDU that is not received. After receiving the second ACK, the sending device may retransmit, to the receiving device, the SLC PDU that is not received and that is indicated by the second ACK.

If the receiving device determines, based on the frame header information, that all the SLC PDUs of the SLC SDU is received, the receiving device may splice the SLC PDUs to obtain an SLC SDU, and upload the SLC SDU to the MDCP layer.

At the MDCP layer, the receiving device may use the SLC SDU as an MDCP PDU. The receiving device may determine, based on a successor indicator field of the MDCP PDU, whether the current MDCP PDU is a last MDCP PDU of an MDCP SDU.

If the receiving device determines, based on the successor indicator field, that the currently received MDCP PDU is not a last MDCP PDU in all MDCP PDUs of the MDCP SDU, the receiving device may send a first ACK at the SLC layer. After receiving the first ACK, the sending device may send a next MDCP PDU of the MDCP SDU to the receiving device.

The receiving device may send a first message to the SLC layer at the MDCP layer, and the first message may indicate the receiving device to send the first ACK to the sending device at the SLC layer.

If the receiving device determines, based on the successor indicator field, that the currently received MDCP PDU is the last MDCP PDU in all the MDCP PDUs of the MDCP SDU, the receiving device may splice the MDCP PDUs into an MDCP SDU in a receiving sequence, and upload the MDCP SDU to the APP layer.

It should be noted that after determining, based on the successor indicator field, that the currently received MDCP PDU is the last MDCP PDU in all the MDCP PDUs of the MDCP SDU, the receiving device does not send the first ACK at the SLC layer. The first ACK indicates that the receiving device receives, at the SLC layer, all SLC PDUs of the currently sent SLC SDU.

S1111: The receiving device uses the MDCP SDU as an application layer packet, parses the application layer packet, and generates application layer receipt information based on a result obtained by parsing the application layer packet.

At the APP layer, the receiving device may use the MDCP SDU as the application layer packet, and parse the application layer packet. After parsing the application layer packet, the receiving device may generate corresponding application layer receipt information based on a result obtained by parsing the application layer packet. Specifically, when the receiving device is the BeiDou network device 200, for detailed descriptions of generating the application layer receipt information by the receiving device, refer to the embodiment in FIG. 9. When the receiving device is the terminal 100, for detailed descriptions of generating the application layer receipt information by the receiving device, refer to the embodiment in FIG. 10. Details are not described herein again.

Herein, the application layer receipt information may not only indicate a case in which the receiving device parses the application layer packet, but also may indicate that the receiving device receives all SLC PDUs of a last SLC SDU at the SLC layer.

S1112: The receiving device sends the application layer receipt information to the sending device.

Specifically, for a procedure in which the sending device obtains the application layer receipt information, refer to the embodiments shown in FIG. 9 to FIG. 10. Details are not described herein again.

After receiving the application layer receipt information, the sending device may determine, based on the application layer receipt information, the result obtained by parsing the application layer packet by the receiving device. Further, the sending device may perform a corresponding operation based on the application layer receipt information. For specific descriptions, refer to the embodiment in FIG. 7A and FIG. 7B. Details are not described herein again.

In a possible implementation, the sending device may indicate, by adding a receipt indicator field to a packet header, the receiving device whether to feed back the application layer receipt information. In this way, the sending device may determine whether an application layer receipt needs to be fed back, and in some cases in which the application layer receipt is not required, a time period for the receiving device to feed back an ACK is reduced.

That is, at the APP layer, when the receiving device determines not to return the application layer receipt information (for example, a value of the receipt indicator field is 0), the receiving device sends the first ACK to the sending device at the SLC layer. When the receiving device determines to return the application layer receipt information (for example, the value of the receipt indicator field is 0), the receiving device may obtain, through parsing, original data of the application layer packet, generate the application layer receipt information based on the result obtained by parsing the application layer packet, and then send the application layer receipt information to the sending device.

In a possible implementation, when the receiving device determines, based on the receipt indicator field, whether to return the application layer receipt information, the receiving device may parse the receipt indicator field at the MDCP layer, and determine, based on the value of the receipt indicator field, whether to return the application layer receipt information. In this way, the sending device may determine, based on only the application layer receipt information, a receiving status of the SLC layer of the receiving device and a status of parsing the application layer packet by the receiving device. In addition, because the receiving device feeds back only the application layer receipt information, resources used by the receiving device to send an ACK frame can be further reduced.

For example, at the SLC layer, after receiving the SLC PDU sent by the sending device, the receiving device may return an ACK based on the frame header information of the SLC PDU.

If the receiving device determines, based on the frame header information, that not all SLC PDUs of the SLC SDU are received, the receiving device may send the second ACK to the sending device. The second ACK may indicate that the receiving device does not receive all the SLC PDUs of the SLC SDU, and the second ACK may further indicate a frame sequence number of an SLC PDU that is not received. After receiving the second ACK, the sending device may retransmit, to the receiving device, the SLC PDU that is not received and that is indicated by the second ACK.

If the receiving device determines, based on the frame header information, that all the SLC PDUs of the SLC SDU is received, the receiving device may splice the SLC PDUs to obtain an SLC SDU, and upload the SLC SDU to the MDCP layer as an MDCP PDU.

At the MDCP layer, the receiving device may determine, based on a successor indicator field of the MDCP PDU, whether the current MDCP PDU is a last MDCP PDU of an MDCP SDU.

If the receiving device determines, based on the successor indicator field, that the currently received MDCP PDU is not a last MDCP PDU in all MDCP PDUs of the MDCP SDU, the receiving device may indicate the SLC layer to send a first ACK. After receiving the first ACK, the sending device may send a next MDCP PDU of the MDCP SDU to the receiving device.

If the receiving device determines, based on the successor indicator field, that the currently received MDCP PDU is the last MDCP PDU in all the MDCP PDUs of the MDCP SDU, the receiving device may splice the MDCP PDUs to obtain an MDCP SDU. It should be noted that when the receiving device is the BeiDou network device 200, the BeiDou network device 200 may remove padding data of a spliced MDCP PDU based on a redundancy length indicator field, to obtain an MDCP SDU.

At the MDCP layer, the receiving device may determine, based on a receipt indicator field, whether to return application layer receipt information to the sending device.

When the receiving device determines not to return the application layer receipt information (for example, a value of the receipt indicator field is 0), the receiving device indicates the SLC layer to send the first ACK to the sending device, and uploads the MDCP SDU to the APP layer. At the APP layer, the receiving device may use the MDCP SDU as an application layer packet, and parse the application layer packet.

When the receiving device determines that the application layer receipt information is returned (for example, the value of the receipt indicator field is 0), the receiving device directly uploads the MDCP SDU to the APP layer, and parses the MDCP SDU as the application layer packet. The receiving device may simultaneously indicate the APP layer to feed back the application layer receipt information. The receiving device may generate the corresponding application layer receipt information based on a result obtained by parsing the application layer packet. The receiving device may send the application layer receipt information to the sending device. When the receiving device is the BeiDou network device 200, for detailed descriptions of generating the application layer receipt information by the receiving device, refer to the embodiment in FIG. 9. When the receiving device is the terminal 100, for detailed descriptions of generating the application layer receipt information by the receiving device, refer to the embodiment in FIG. 10. Details are not described herein again.

After the sending device receives the application layer receipt information, the sending device may determine, based on the application layer receipt information, the result obtained by parsing the application layer packet by the receiving device. Herein, the application layer receipt information may further be equivalent to the first ACK, and the sending device may determine, based on the application layer receipt information, that the receiving device receives all SLC PDUs corresponding to the last MDCP PDU of the MDCP SDU.

In some possible embodiments, the receiving device may be preset to return the application layer receipt information to the sending device. In this way, the receiving device automatically returns the application layer receipt information without performing determining based on the receipt indicator field.

The following describes the terminal 100 provided in an embodiment of this application.

The terminal 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in this embodiment of this application.

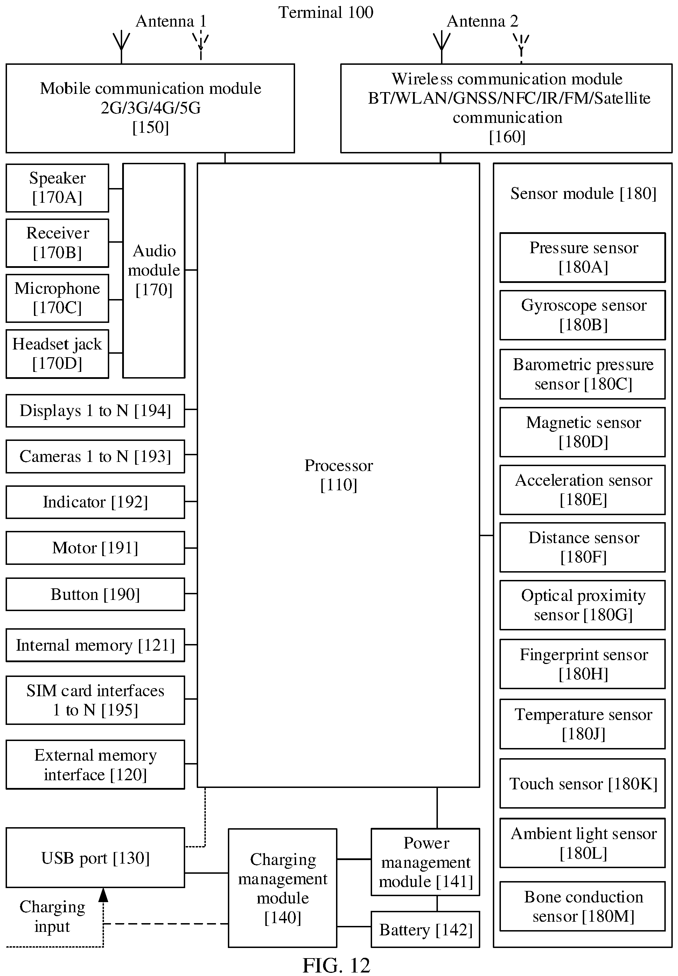

FIG. 12 is a schematic diagram of a hardware structure according to an embodiment of this application.

The following uses the terminal 100 as an example to specifically describe this embodiment. It should be understood that the terminal 100 shown in FIG. 12 is merely an example. In addition, the terminal 100 may have more or fewer components than those shown in FIG. 12, or two or more components may be combined, or a different component configuration may be used. Components shown in FIG. 12 may be implemented in hardware that includes one or more signal processing and/or application-specific integrated circuits, software, or a combination of hardware and software.

The terminal 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through the I2C bus interface to implement a touch function of the terminal 100.

The I2S interface may be used to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used to perform asynchronous communication. The bus may be a two-way communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be used to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the terminal 100. The processor 110 communicates with the display 194 through the DSI interface, to implement a display function of the terminal 100.

The GPIO interface may be configured by software. The GPIO interface may be configured as a control signal or a data signal. In some embodiments, the GPIO interface may be used to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be used to connect to a charger to charge the terminal 100, or may be used to transmit data between the terminal 100 and a peripheral device, or may be used to connect to a headset for playing audio through the headset. The interface may be further used to connect to another electronic device such as an AR device.

It may be understood that an interface connection relationship between the modules that is shown in this embodiment of the present invention is merely an example for description, and does not constitute a limitation on the structure of the terminal 100. In some other embodiments of this application, the terminal 100 may alternatively use different interface connection manners in the foregoing embodiments or a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the terminal 100. The charging management module 140 supplies power to an electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), a satellite communication module, frequency modulation (frequency modulation, FM), a near field communication (near field communication, NFC) technology, an infrared (infrared, IR) technology, or the like and that is applied to the terminal 100. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The satellite communication module may be configured to communicate with a satellite network device. For example, in the BeiDou communication system, the satellite communication module may communicate with the BeiDou network device 200, and the satellite communication module may support short message transmission between the satellite communication module and the BeiDou network device 200.

In some embodiments, the antenna 1 of the terminal 100 is coupled to the mobile communication module 150, and the antenna 2 thereof is coupled to the wireless communication module 160, so that the terminal 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBASs).

The terminal 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal 100 may include one or N displays 194, where N is a positive integer greater than 1.

The terminal 100 may implement an image shooting function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transform on frequency energy.

The video codec is configured to compress or decompress a digital video. The terminal 100 may support one or more types of video codecs. In this way, the terminal 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. The NPU can implement applications such as intelligent cognition of the terminal 100, such as image recognition, facial recognition, speech recognition, and text understanding.

The external memory interface 120 may be configured to connect to an external memory card, for example, a micro SD card, to extend a storage capability of the terminal 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the terminal 100 and data processing. The internal memory 121 may include a program storage region and a data storage region. The program storage region may store an operating system, an application required by at least one function (for example, a voice playing function or an image playing function), and the like. The data storage region may store data (for example, audio data or a phone book) created in a process of using the terminal 100. In addition, the internal memory 121 may include a highspeed random access memory, or may include a nonvolatile memory, for example, at least one magnetic disk storage device, a flash memory, or a universal flash storage (universal flash storage, UFS).

The terminal 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal. The terminal 100 may be used to listen to music or answer a hands-free call through the speaker 170A.

The receiver 170B, also referred to as an "earpiece", is configured to convert an electrical audio signal into a sound signal. When a call is answered or voice information is received through the terminal 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, and identify a sound source, so as to implement a directional recording function and the like.

The headset jack 170D is configured to connect to a wired headset. The headset jack 170D may be a USB port 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed in the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure strength based on a capacitance change. When a touch operation is performed on the display 194, the terminal 100 detects intensity of the touch operation by using the pressure sensor 180A. The terminal 100 may also calculate a touch position based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating an SMS message is performed.

The gyroscope sensor 180B may be configured to determine a motion posture of the terminal 100. In some embodiments, angular velocities of the terminal 100 around three axes (namely, x, y, and z axes) may be determined by using the gyroscope sensor 180B. The gyroscope sensor 180B may be configured to implement image stabilization during photographing. For example, when the shutter is pressed, the gyroscope sensor 180B detects an angle at which the terminal 100 jitters, calculates, based on the angle, a distance for which a lens module needs to compensate, and allows the lens to cancel the jitter of the terminal 100 through reverse motion, to implement image stabilization. The gyroscope sensor 180B may also be used in a navigation scenario and a somatic game scenario.

The barometric pressure sensor 180C is configured to measure barometric pressure. In some embodiments, the terminal 100 calculates an altitude through the barometric pressure measured by the barometric pressure sensor 180C, to assist in positioning and navigation.

The magnetic sensor 180D includes a Hall sensor. The terminal 100 may detect opening and closing of a flip cover by using the magnetic sensor 180D. In some embodiments, when the terminal 100 is a flip phone, the terminal 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect values of accelerations of the terminal 100 in various directions (usually on three axes). A magnitude and a direction of gravity may be detected when the terminal 100 is stationary. The acceleration sensor may be further configured to identify a posture of an electronic device, and is used in an application such as switching between a landscape mode and a portrait mode or a pedometer.

The distance sensor 180F is configured to measure a distance. The terminal 100 may measure a distance by using infrared light or a laser. In some embodiments, in a photographing scenario, the terminal 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The terminal 100 emits infrared light outward by using the light-emitting diode. The terminal 100 detects infrared reflected light from a nearby object by using the photodiode. When sufficient reflected light is detected, the terminal 100 may determine that there is an object near the terminal device 100. When insufficient reflected light is detected, the terminal 100 may determine that there is no object near the terminal 100. The terminal 100 may detect, by using the optical proximity sensor 180G, that the user holds the terminal 100 close to an ear for a call, to automatically turn off a screen for power saving. The optical proximity sensor 180G may also be used in a flip cover mode or a pocket mode to automatically perform screen unlocking or locking.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy by using the temperature detected by the temperature sensor 180J. For example, when the temperature reported by the temperature sensor 180J exceeds a threshold, the terminal 100 reduces performance of a processor located near the temperature sensor 180J, to reduce power consumption and implement heat protection. In some other embodiments, when the temperature is lower than another threshold, the terminal 100 heats the battery 142, to avoid abnormal shutdown of the terminal 100 caused by a low temperature. In some other embodiments, when the temperature is lower than still another threshold, the terminal 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. The display 194 may provide a visual output related to the touch operation. In some other embodiments, the touch sensor 180K may alternatively be disposed on a surface of the terminal 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to user setting and function control of the terminal 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different regions of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is used to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The terminal 100 interacts with a network through the SIM card, to implement functions such as calling and data communication. In some embodiments, the terminal 100 uses an eSIM, namely, an embedded SIM card. The eSIM card may be embedded in the terminal 100, and cannot be separated from the terminal 100.

The following describes a method for transmitting an application layer receipt in a BeiDou communication system according to an embodiment of this application.

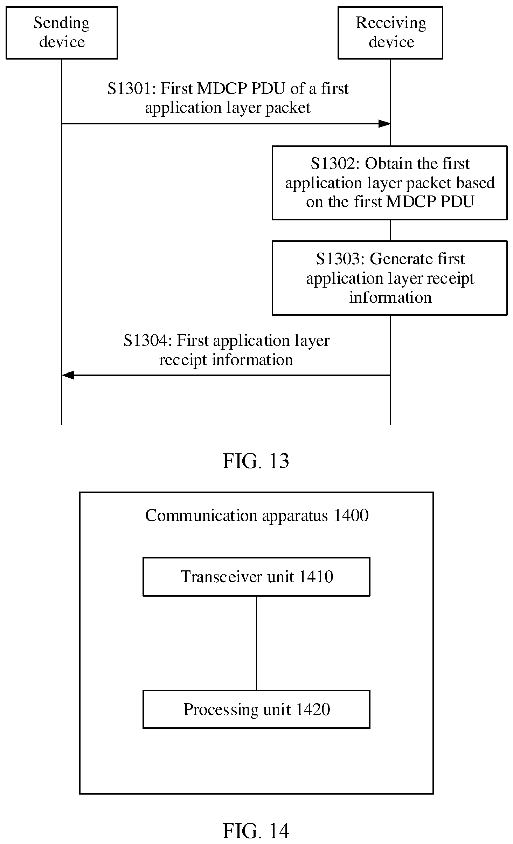

FIG. 13 is a schematic flowchart of a method for transmitting an application layer receipt in a BeiDou communication system according to an embodiment of this application.

As shown in FIG. 13, the method for transmitting an application layer receipt in a BeiDou communication system includes the following steps.

S1301: A sending device sends a first MDCP PDU of a first application layer packet to a receiving device.

Packet header information of the first MDCP PDU includes a successor indicator field, and the successor indicator field indicates a sequence of the first MDCP PDU in the first application layer packet. For specific descriptions of the MDCP PDU, refer to the foregoing embodiments. Details are not described herein again.

S1302: The receiving device obtains the first application layer packet based on the first MDCP PDU.

After the receiving device determines that the first MDCP PDU is a last MDCP PDU of M MDCP PDUs in the first application layer packet, the receiving device obtains the first application layer packet based on the first MDCP PDU, where M is a positive integer. For specific descriptions of obtaining the first application layer packet based on the MDCP PDU, refer to the embodiments shown in FIG. 2B-1 and FIG. 2B-2 and FIG. 3B-1 and FIG. 3B-2. Details are not described herein again.

S1303: The receiving device generates first application layer receipt information.

The first application layer receipt information indicates a result obtained by parsing the first application layer packet by the receiving device.

For a specific procedure of generating the first application layer receipt information, refer to the foregoing embodiments. Details are not described herein again.

S1304: The receiving device sends the first application layer receipt information to the sending device.

For details about how the receiving device generates the first application layer receipt information, refer to the embodiments in FIG. 7A to FIG. 11B. Details are not described herein again.

For a specific operation of sending the application layer packet by the sending device and a specific operation performed by the sending device based on the first application layer receipt information, refer to the foregoing embodiments shown in FIG. 7A to FIG. 11B. Details are not described herein again.

The following describes some possible implementations performed by the sending device.

In a possible implementation, that the sending device sends the first MDCP PDU in the first application layer packet to the receiving device specifically includes the following steps.

The sending device uses the first MDCP PDU as a first satellite link control layer service data unit SLC SDU of an SLC layer of the sending device, and delivers the first MDCP PDU from an MDCP layer of the sending device to the SLC layer of the sending device.

The sending device segments the first SLC SDU into N satellite link control layer protocol data units SLC PDUs at the SLC layer of the sending device, where N is a positive integer. The N SLC PDUs include a first SLC PDU, and frame header information of the first SLC PDU includes a total frame quantity field and a frame sequence number field. The total frame quantity field indicates a total quantity N of SLC PDUs included in the first SLC SDU, and the frame sequence number field indicates a frame sequence number of the first SLC PDU in the first SLC SDU.

The sending device sends the N SLC PDUs to the receiving device.

For details, refer to the embodiment shown in FIG. 4. Details are not described herein again.

In a possible implementation, the first application layer receipt information further indicates that the receiving device has received all the N SLC PDUs of the first SLC SDU. In this way, the sending device may determine, based on the first application layer receipt information, that the receiving device has received all SLC PDUs corresponding to the application layer packet.

For details, refer to the embodiment shown in FIG. 11A and FIG. 11B. Details are not described herein again.

In a possible implementation, before the sending device receives the first application layer receipt information sent by the receiving device, the method further includes: The sending device receives a first acknowledgment character ACK sent by the receiving device. The first ACK indicates that the receiving device has received all the N SLC PDUs of the first SLC SDU.

For details, refer to the embodiment shown in FIG. 7A and FIG. 7B. Details are not described herein again.

In a possible implementation, before the sending device receives the first application layer receipt information sent by the receiving device, the method further includes: The sending device receives a second acknowledgment character ACK sent by the receiving device. The first ACK indicates a frame sequence number of an SLC PDU that is in the first SLC SDU and that is not received by the receiving device.

The sending device retransmits, to the receiving device, the SLC PDU that is in the first SLC SDU and that is not received by the receiving device.

For details, refer to the embodiments shown in FIG. 7A and FIG. 7B and FIG. 11A and FIG. 11B. Details are not described herein again.

In this way, it can be ensured that the receiving device can obtain the complete application layer packet.

In a possible implementation, that the sending device sends the N SLC PDUs to the receiving device specifically includes: The sending device delivers the first SLC PDU from the SLC layer of the sending device to a physical PHY layer as a first user frame at the PHY layer of the sending device.

The sending device performs physical layer processing on the first user frame to obtain first inbound data.

The sending device sends the first inbound data to the receiving device.

For details, refer to the embodiments shown in FIG. 2A-1 and FIG. 2A-2 and FIG. 3A-1 and FIG. 3A-2. Details are not described herein again.

In a possible implementation, before the sending device sends the first MDCP PDU in the first application layer packet to the receiving device, the method further includes: The sending device obtains, at a message data convergence protocol MDCP layer, the first application layer packet delivered by an application layer of the sending device.

The sending device uses, at the MDCP layer, the first application layer packet as an MDCP SDU, and segments the MDCP SDU into M MDCP PDUs, where M is a positive integer. The M MDCP PDUs include the first MDCP PDU.

For details, refer to the embodiments shown in FIG. 2A-1 and FIG. 2A-2 and FIG. 3A-1 and FIG. 3A-2. Details are not described herein again.

In a possible implementation, the method further includes: The sending device delivers the M MDCP PDUs from the MDCP layer to the SLC layer as M SLC SDUs of the SLC layer, where the M SLC SDUs include the first SLC SDU.

For details, refer to the embodiments shown in FIG. 7A and FIG. 7B and FIG. 11A and FIG. 11B. Details are not described herein again.

In a possible implementation, before the sending device obtains, at the MDCP layer, the first application layer packet delivered by the application layer of the sending device, the method further includes: The sending device obtains original data.

The sending device encodes and compresses the original data at the application layer to obtain first compressed data.

The sending device encrypts the first compressed data at the application layer to obtain first encrypted data.

The sending device adds packet header information to a header of the first encrypted data, to obtain the first application layer packet. The packet header information includes a compression indicator field and an encryption indicator field, the compression indicator field indicates an encoding and compression algorithm used when the original data is compressed, and the encryption indicator field indicates an encryption algorithm used when the first compressed data is encrypted.

For details, refer to the embodiments shown in FIG. 7A and FIG. 7B and FIG. 11A and FIG. 11B. Details are not described herein again.

In a possible implementation, after the sending device receives the first application layer receipt information sent by the receiving device, the method further includes: The sending device determines, based on the first application layer receipt information, that the receiving device fails to parse the first application layer packet, and the sending device retransmits the first application layer packet to the receiving device.

For details, refer to the embodiment shown in FIG. 7A and FIG. 7B. Details are not described herein again.

In this way, when determining that the receiving device fails to parse an application layer packet, the sending device may send the application layer packet again, to avoid a case in which the receiving device fails to parse the application layer packet due to a data error in a transmission process.

In a possible implementation, the first application layer receipt information includes a first parsing result, and the first parsing result indicates that the receiving device fails to decrypt the first application layer packet. After the sending device receives the first application layer receipt information sent by the receiving device, the method further includes: The sending device negotiates key information with the receiving device.

The sending device encrypts the first compressed data based on the negotiated key information, to obtain second encrypted data.

The sending device sends a second application layer packet including the second encrypted data to the receiving device.

For details, refer to the embodiment shown in FIG. 7A and FIG. 7B. Details are not described herein again.

In a possible implementation, the first application layer receipt information includes a second parsing result, and the second parsing result indicates that the receiving device fails to decode and decompress an application layer packet. After the sending device receives the first application layer receipt information sent by the receiving device, the method further includes: The sending device negotiates a codebook with the receiving device based on the second parsing result.

The sending device encodes and compresses the original data based on the negotiated codebook to obtain second compressed data.

The sending device encrypts the second compressed data to obtain third encrypted data.

The sending device sends a third application layer packet to the receiving device, where the third application layer packet includes the third encrypted data.

For details, refer to the embodiment shown in FIG. 7A and FIG. 7B. Details are not described herein again.

In a possible implementation, the sending device is a terminal, and the receiving device is a BeiDou network device.

For details, refer to the embodiments shown in FIG. 7A and FIG. 7B and FIG. 11A and FIG. 11B. Details are not described herein again.

In a possible implementation, the sending device is a BeiDou network device, and the receiving device is a terminal.

For details, refer to the embodiments shown in FIG. 7A and FIG. 7B and FIG. 11A and FIG. 11B. Details are not described herein again.

The following describes some possible implementations performed by the receiving device.

In a possible implementation, before the receiving device generates the first application layer receipt information, the method further includes: The receiving device decrypts first encrypted data in the first application layer packet, and obtains first compressed data after the decryption succeeds.

For details, refer to the embodiments shown in FIG. 7A and FIG. 7B and FIG. 11A and FIG. 11B. Details are not described herein again.

In a possible implementation, after the receiving device decrypts the first encrypted data in the first application layer packet, and obtains the first compressed data after the decryption succeeds, the method further includes: The receiving device decodes and decompresses the first compressed data to obtain original data.

For details, refer to the embodiments shown in FIG. 7A and FIG. 7B and FIG. 11A and FIG. 11B. Details are not described herein again.

In a possible implementation, before the receiving device generates the first application layer receipt information, the method further includes: The receiving device fails to decrypt the first encrypted data.

The receiving device generates the first application layer receipt information. The first application layer receipt information includes a first parsing result, and the first parsing result indicates that the receiving device fails to perform decryption.

For details, refer to the embodiments shown in FIG. 7A and FIG. 7B and FIG. 11A and FIG. 11B. Details are not described herein again.

In this way, when decryption fails, the receiving device may generate application layer receipt information indicating that the receiving device fails to decrypt an application layer packet.

In a possible implementation, before the receiving device generates the first application layer receipt information, the method further includes: The receiving device fails to decode and decompress the first compressed data.

The receiving device generates the first application layer receipt information. The first application layer receipt information includes a second parsing result, and the second parsing result indicates that the receiving device fails to perform decoding.

For details, refer to the embodiments shown in FIG. 7A and FIG. 7B and FIG. 11A and FIG. 11B. Details are not described herein again.

In this way, when decoding fails, the receiving device may generate application layer receipt information indicating that the receiving device fails to decode an application layer packet.

In a possible implementation, the first application layer receipt information includes a third parsing result, and the third parsing result indicates that the receiving device successfully parses the application layer packet.

For details, refer to the embodiments shown in FIG. 7A and FIG. 7B and FIG. 11A and FIG. 11B. Details are not described herein again.

In this way, when parsing succeeds, the receiving device may generate application layer receipt information indicating that the receiving device successfully parses the application layer packet.

In a possible implementation, the method further includes: When the receiving device is a BeiDou network device 200, the original data may be sent to cellular user equipment through a cellular network.

For details, refer to the embodiments shown in FIG. 7A and FIG. 7B and FIG. 11A and FIG. 11B. Details are not described herein again.

In this way, when parsing succeeds, the receiving device may forward data to user equipment in the cellular network.

In a possible implementation, before the receiving device receives the first MDCP PDU of the first application layer packet sent by the sending device, the method further includes: The receiving device obtains, at a PHY layer, first inbound data sent by the sending device.

The receiving device performs physical layer processing based on the first inbound data to obtain a first user frame.

The receiving device uses the first user frame as a first SLC PDU at an SLC layer of the receiving device, and delivers the first user frame from the PHY layer to the SLC layer of the receiving device.

For details, refer to the embodiments shown in FIG. 7A and FIG. 7B and FIG. 11A and FIG. 11B. Details are not described herein again.

In a possible implementation, after the receiving device uses the first user frame as the first SLC PDU at the SLC layer of the receiving device, and delivers the first user frame from the PHY layer to the SLC layer of the receiving device, the method further includes: The receiving device receives X SLC PDUs of a first SLC SDU sent by the sending device, where X is a positive integer. The X SLC PDUs include the first SLC PDU, and frame header information of the first SLC PDU includes a total frame quantity field and a frame sequence number field. The total frame quantity field indicates a total quantity N of SLC PDUs included in the first SLC SDU, where N is a positive integer, and the frame sequence number field indicates a frame sequence number of the first SLC PDU in the first SLC SDU

When X is less than N, the receiving device sends a second ACK to the sending device, where the second ACK indicates a frame sequence number of an SLC PDU that is in the first SLC SDU and that is not received by the receiving device.

For details, refer to the embodiments shown in FIG. 7A and FIG. 7B and FIG. 11A and FIG. 11B. Details are not described herein again.

In this way, the receiving device may indicate the sending device to retransmit a lost SLC PDU.

In a possible implementation, after the receiving device receives the X SLC PDUs of the first SLC SDU sent by the sending device, the method further includes: When X is equal to N, the receiving device splices the X SLC PDUs into the first SLC SDU at the SLC layer, and reports the first SLC SDU, as the first MDCP PDU of an MDCP layer, from the SLC layer of the receiving device to the MDCP layer of the receiving device.

For details, refer to the embodiments shown in FIG. 7A and FIG. 7B and FIG. 11A and FIG. 11B. Details are not described herein again.

In a possible implementation, after the receiving device receives the X SLC PDUs of the first SLC SDU sent by the sending device, the method further includes: When X is equal to N, the receiving device sends a first ACK to the sending device, where the first ACK indicates that the receiving device has received all N SLC PDUs of the first SLC SDU.

For details, refer to the embodiments shown in FIG. 7A and FIG. 7B and FIG. 11A and FIG. 11B. Details are not described herein again.

In a possible implementation, that after the receiving device determines that the first MDCP PDU is a last MDCP PDU of M MDCP PDUs in the application layer packet, the receiving device obtains the application layer packet based on the first MDCP PDU specifically includes: The receiving device splices, at the MDCP layer, the M MDCP PDUs to obtain an MDCP SDU, and reports the MDCP SDU as the application layer packet from the MDCP layer to an application layer.

For details, refer to the embodiments shown in FIG. 7A and FIG. 7B and FIG. 11A and FIG. 11B. Details are not described herein again.

In a possible implementation, that the receiving device sends the first application layer receipt information to the sending device specifically includes: The receiving device sends the first application layer receipt information from the application layer of the receiving device to the SLC layer of the receiving device through a preset interface.

After adding frame header information to the first application layer receipt information at the SLC layer, the receiving device delivers, to the physical layer, the first application layer receipt information to which the frame header information is added, to obtain a receipt frame. The frame header information includes a frame type field, and the frame type field indicates a frame type of a user frame.

The receiving device sends the receipt frame to the sending device.

For details, refer to the embodiments shown in FIG. 7A to FIG. 11B. Details are not described herein again.

In a possible implementation, that the receiving device sends the first application layer receipt information to the sending device specifically includes the following steps.

The receiving device encapsulates the first application layer receipt information into an application layer receipt packet, and sends the application layer receipt packet to the sending device.

For details, refer to the embodiments shown in FIG. 7A to FIG. 11B. Details are not described herein again.

In a possible implementation, the sending device is a terminal, and the receiving device is a BeiDou network device.

For details, refer to the embodiments shown in FIG. 7A to FIG. 11B. Details are not described herein again.

In a possible implementation, the sending device is a BeiDou network device, and the receiving device is a terminal.

For details, refer to the embodiments shown in FIG. 7A to FIG. 11B. Details are not described herein again.

The foregoing content describes in detail the methods provided in this application. To better implement the foregoing solutions in embodiments of this application, embodiments of this application further provide corresponding apparatuses or devices.

In embodiments of this application, the terminal 100 and the BeiDou network device 200 may be divided into function modules based on the foregoing method examples, for example, each function module may be obtained through division based on each corresponding function, or two or more functions may be integrated into one processing module. The integrated module may be implemented in a form of hardware, or may be implemented in a form of a software function module. It should be noted that, in embodiments of this application, division into modules is an example, and is merely a logical function division. In an actual implementation, another division manner may be used.

The following describes in detail communication apparatuses in embodiments of this application with reference to FIG. 14 to FIG. 17.

When an integrated unit is used, refer to FIG. 14. FIG. 14 is a schematic diagram of a structure of a communication apparatus 1400 according to an embodiment of this application. The communication apparatus 1400 may be the terminal 100 in the foregoing embodiments. Optionally, the communication apparatus 1400 may be a chip/chip system, for example, a BeiDou communication chip. As shown in FIG. 14, the communication apparatus 1400 may include a transceiver unit 1410 and a processing unit 1420.

In an inbound design, the transceiver unit 1410 may be configured to send a first MDCP PDU in a first application layer packet to the BeiDou network device 200. Packet header information of the first MDCP PDU includes a successor indicator field. The successor indicator field indicates a sequence of the first MDCP PDU in the first application layer packet.

The transceiver unit 1410 may be configured to: when the first MDCP PDU is a last MDCP PDU in the first application layer packet, receive first application layer receipt information returned by the BeiDou network device 200, where the first application layer receipt information indicates a result obtained by parsing the first application layer packet by the BeiDou network device 200.

The processing unit 1420 may be configured to generate the first application layer packet.

In an outbound design, the transceiver unit 1410 may be configured to receive a first MDCP PDU. Packet header information of the first MDCP PDU includes a successor indicator field. The successor indicator field indicates a sequence of the first MDCP PDU in the first application layer packet.

The processing unit 1420 may be configured to: after determining that the first MDCP PDU is a last MDCP PDU of M MDCP PDUs in the first application layer packet, obtain the first application layer packet based on the first MDCP PDU, where M is a positive integer.

The processing unit 1420 may be configured to generate first application layer receipt information, where the first application layer receipt information indicates a result obtained by parsing the first application layer packet by the terminal 100.

The transceiver unit 1410 may be configured to send the first application layer receipt information to the BeiDou network device 200.

Optionally, the transceiver unit 1410 may be further configured to perform function steps related to sending and receiving that are performed by the terminal 100 in the method embodiment shown in FIG. 13.

Optionally, the processing unit 1420 may be further configured to perform function steps that are related to protocol parsing, encapsulation, and operation determining and that are performed by the terminal 100 in the method embodiment shown in FIG. 13.

It should be understood that the communication apparatus 1200 in this design may correspondingly perform the method steps performed by the terminal 100 in the foregoing embodiments. For brevity, details are not described herein again.

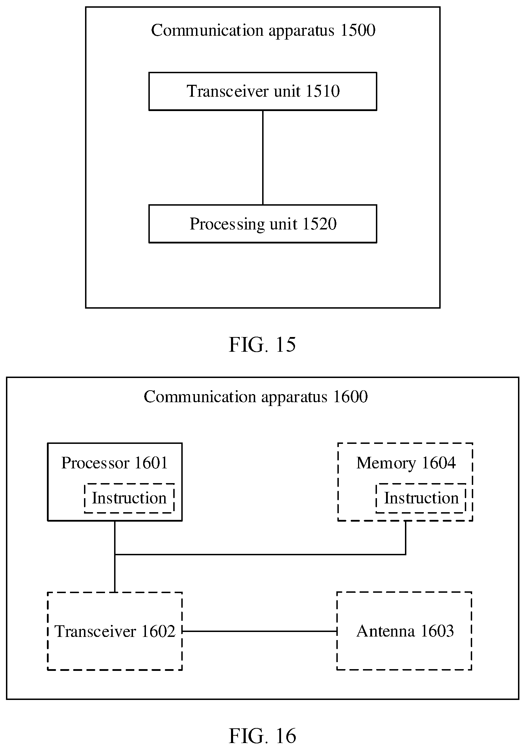

When an integrated unit is used, refer to FIG. 15. FIG. 15 is a schematic diagram of a structure of a communication apparatus 1500 according to an embodiment of this application. The communication apparatus 1500 may be the BeiDou network device 200 in the foregoing embodiments. Optionally, the communication apparatus 1500 may be a specific network element in the BeiDou network device 200, for example, one or a combination of a plurality of network elements of a BeiDou ground sending/receiving station 22, a BeiDou central station 23, and a BeiDou short message converged communication platform 24. As shown in FIG. 15, the communication apparatus 1500 may include a transceiver unit 1510 and a processing unit 1520.

In an inbound design, the transceiver unit 1510 may be configured to receive a first MDCP PDU. Packet header information of the first MDCP PDU includes a successor indicator field. The successor indicator field indicates a sequence of the first MDCP PDU in the first application layer packet.

The processing unit 1520 may be configured to: after determining that the first MDCP PDU is a last MDCP PDU of M MDCP PDUs in the first application layer packet, obtain the first application layer packet based on the first MDCP PDU, where M is a positive integer.

The processing unit 1520 may be configured to generate first application layer receipt information, where the first application layer receipt information indicates a result obtained by parsing the first application layer packet by the BeiDou network device 200.

The transceiver unit 1510 may be configured to send the first application layer receipt information to the terminal 100.

In an outbound design, the transceiver unit 1510 may be configured to send a first MDCP PDU in a first application layer packet to the terminal 100. Packet header information of the first MDCP PDU includes a successor indicator field. The successor indicator field indicates a sequence of the first MDCP PDU in the first application layer packet.

The transceiver unit 1510 may be configured to: when the first MDCP PDU is a last MDCP PDU in the first application layer packet, receive first application layer receipt information returned by the terminal 100, where the first application layer receipt information indicates a result obtained by parsing the first application layer packet by the terminal 100.

The processing unit 1520 may be configured to generate the first application layer packet.

Optionally, the transceiver unit 1510 may be further configured to perform function steps related to sending and receiving that are performed by the BeiDou network device 200 in the method embodiment shown in FIG. 13.

Optionally, the processing unit 1520 may be further configured to perform function steps that are related to protocol parsing, encapsulation, and operation determining and that are performed by the BeiDou network device 200 in the method embodiment shown in FIG. 13.

It should be understood that the communication apparatus 1500 in this design may correspondingly perform the method steps performed by the BeiDou network device 200 in the foregoing embodiments. For brevity, details are not described herein again.

The foregoing describes the terminal 100 and the BeiDou network device 200 in embodiments of this application. It should be understood that a product that is in any form and that has a function of the terminal 100 in FIG. 14 and a product that is in any form and that has a function of the BeiDou network device 200 in FIG. 15 fall within the protection scope of embodiments of this application.

In a possible product form, the terminal 100 in embodiments of this application may be implemented by using general bus architectures.

Refer to FIG. 16. FIG. 16 is a schematic diagram of a structure of a communication apparatus 1600 according to an embodiment of this application. The communication apparatus 1600 may be the terminal 100 or an apparatus in the terminal 100. As shown in FIG. 16, the communication apparatus 1600 includes a processor 1601 and a transceiver 1602 that is internally connected to and communicates with the processor. The processor 1601 is a general-purpose processor, a dedicated processor, or the like, for example, may be a baseband processor or a central processing unit for satellite communication. The baseband processor for satellite communication may be configured to process a satellite communication protocol and satellite communication data. The central processing unit may be configured to control a communication apparatus (for example, a baseband chip, a terminal, or a terminal chip), execute a computer program, and process data of the computer program. The transceiver 1602 may be referred to as a transceiver unit, a transceiver machine, a transceiver circuit, or the like, and is configured to implement a transceiver function. The transceiver 1602 may include a receiver and a transmitter. The receiver may be referred to as a receiver machine, a receiver circuit, or the like, and is configured to implement a receiving function. The transmitter may be referred to as a sending machine, a transmitter circuit, or the like, and is configured to implement a sending function. Optionally, the communication apparatus 1600 may further include an antenna 1603 and/or a radio frequency unit (not shown in the figure). The antenna 1603 and/or the radio frequency unit may be located inside the communication apparatus 1600, or may be separated from the communication apparatus 1600. In other words, the antenna 1603 and/or the radio frequency unit may be deployed remotely or in a distributed manner.

Optionally, the communication apparatus 1600 may include one or more memories 1604. The memory 1604 may store instructions. The instructions may be a computer program. The computer program may be run on the communication apparatus 1600, so that the communication apparatus 1600 performs the method described in the foregoing method embodiments. Optionally, the memory 1604 may further store data. The communication apparatus 1600 and the memory 1604 may be separately disposed, or may be integrated together.

The processor 1601, the transceiver 1602, and the memory 1604 may be connected through a communication bus.

In a design, the communication apparatus 1600 may be configured to perform functions of the terminal 100 in the foregoing embodiments. The processor 1601 may be configured to perform function steps that are related to protocol parsing, encapsulation, and operation determining and that are performed by the terminal 100 in the embodiment shown in FIG. 13 and/or another process of the technology described in this specification. The transceiver 1602 may be configured to perform function steps that are related to sending and receiving and that are performed by the terminal 100 in the embodiment shown in FIG. 13 and/or another process of the technology described in this specification.

In any one of the foregoing designs, the processor 1601 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1601 may store instructions, and the instructions may be a computer program. The computer program is run on the processor 1601, so that the communication apparatus 1600 can perform the method steps performed by the terminal 100 in the foregoing method embodiments. The computer program may be fixed in the processor 1600. In this case, the processor 1601 may be implemented by hardware.

In an implementation, the communication apparatus 1600 may include a circuit, and the circuit may implement the sending, receiving, or communication function in the foregoing method embodiments. The processor and the transceiver that are described in this application may be implemented on an integrated circuit (integrated circuit, IC), an analog IC, a radio frequency integrated circuit RFIC, a mixed-signal IC, an application specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and the structure of the communication apparatus may not be limited in FIG. 16. The communication apparatus 1600 may be an independent device or may be a part of a large device. For example, the communication apparatus 1600 may be:
(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be embedded in another device;
(5) a receiver machine, a terminal, an intelligent terminal, a cellular phone, a wireless device, a handheld device, a mobile unit, a vehicle-mounted device, a network device, a cloud device, an artificial intelligence device, or the like; or
(6) others.

In a possible product form, any network element (for example, a BeiDou ground sending/receiving station 22, a BeiDou central station 23, or a BeiDou short message converged communication platform 24) in the BeiDou network device 200 in embodiments of this application may be implemented by using a general bus architecture.

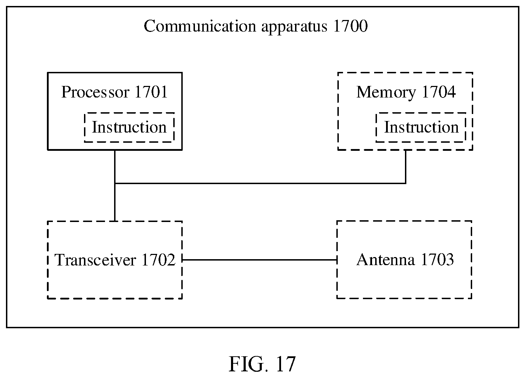

Refer to FIG. 17. FIG. 17 is a schematic diagram of a structure of a communication apparatus 1700 according to an embodiment of this application. The communication apparatus 1700 may be the BeiDou network device 200 or an apparatus in the BeiDou network device 200. As shown in FIG. 17, the communication apparatus 1700 includes a processor 1701 and a transceiver 1702 that is internally connected to and communicates with the processor. The processor 1701 is a general-purpose processor, a dedicated processor, or the like, for example, may be a baseband processor or a central processing unit for satellite communication. The baseband processor for satellite communication may be configured to process a satellite communication protocol and satellite communication data. The central processing unit may be configured to control a communication apparatus (for example, a baseband chip), execute a computer program, and process data of the computer program. The transceiver 1702 may be referred to as a transceiver unit, a transceiver machine, a transceiver circuit, or the like, and is configured to implement a transceiver function. The transceiver 1702 may include a receiver and a transmitter. The receiver may be referred to as a receiver machine, a receiver circuit, or the like, and is configured to implement a receiving function. The transmitter may be referred to as a sending machine, a transmitter circuit, or the like, and is configured to implement a sending function. Optionally, the communication apparatus 1700 may further include an antenna 1703 and/or a radio frequency unit (not shown in the figure). The antenna 1703 and/or the radio frequency unit may be located inside the communication apparatus 1700, or may be separated from the communication apparatus 1700. In other words, the antenna 1703 and/or the radio frequency unit may be deployed remotely or in a distributed manner.

Optionally, the communication apparatus 1700 may include one or more memories 1704. The memory 1704 may store instructions. The instructions may be a computer program. The computer program may be run on the communication apparatus 1700, so that the communication apparatus 1700 performs the method described in the foregoing method embodiments. Optionally, the memory 1704 may further store data. The communication apparatus 1700 and the memory 1704 may be separately disposed, or may be integrated together.

The processor 1701, the transceiver 1702, and the memory 1704 may be connected through a communication bus.

In a design, the communication apparatus 1700 may be configured to perform functions of the BeiDou network device 200 in the foregoing embodiments. The processor 1701 may be configured to perform function steps that are related to protocol parsing, encapsulation, and operation determining and that are performed by the BeiDou network device 200 in the embodiment shown in FIG. 13 and/or another process of the technology described in this specification. The transceiver 1702 may be configured to perform function steps that are related to sending and receiving and that are performed by the BeiDou network device 200 in the embodiment shown in FIG. 13 and/or another process of the technology described in this specification.

In any one of the foregoing designs, the processor 1701 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1701 may store instructions, and the instructions may be a computer program. The computer program is run on the processor 1701, so that the communication apparatus 1700 can perform the method steps performed by the BeiDou network device 200 in the foregoing method embodiments. The computer program may be fixed in the processor 1701. In this case, the processor 1701 may be implemented by hardware.

An embodiment of this application further provides a computer-readable storage medium. The computer-readable storage medium stores computer program code. When the processor executes the computer program code, a communication apparatus performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

An embodiment of this application further provides a BeiDou communication system, including a terminal 100 and a BeiDou network device 200. The terminal 100 and the BeiDou network device 200 may perform the method in any one of the foregoing embodiments.

A short message communication function in a BeiDou communication system is described in this application. It may be understood that another satellite system may also support a short message communication function. Therefore, not limited to the BeiDou communication system, if another satellite system also supports a short message communication function, the method described in this application is also applicable to communication of the another satellite system.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

Persons skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that facilitates transmission of a computer program from one place to another. The storage medium may be any available medium accessible to a general-purpose or a dedicated computer.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments without departing from the scope of the claims.

## Claims

1. A method for transmitting an application layer receipt in a satellite communication system supporting a short message communication function, comprising:
Sending (S1301), by a terminal, a first message data convergence protocol layer protocol data unit MDCP PDU in a first application layer packet to a satellite network device, wherein packet header information of the first MDCP PDU comprises a successor indicator field, and the successor indicator field indicates a sequence of the first MDCP PDU in the first application layer packet; and
when the first MDCP PDU is a last MDCP PDU in the first application layer packet, receiving (S1304), by the terminal, first application layer receipt information sent by the satellite network device, wherein the first application layer receipt information indicates a result obtained by parsing the first application layer packet by the satellite network device.

2. The method according to claim 1, wherein the sending, by a terminal, a first MDCP PDU in a first application layer packet to a satellite network device specifically comprises:
using, by the terminal, the first MDCP PDU as a first satellite link control layer service data unit SLC SDU of an SLC layer of the terminal, and delivering the first MDCP PDU from an MDCP layer of the terminal to the SLC layer of the terminal;
segmenting, by the terminal, the first SLC SDU into N satellite link control layer protocol data units SLC PDUs at the SLC layer of the terminal, wherein N is a positive integer, the N SLC PDUs comprise a first SLC PDU, frame header information of the first SLC PDU comprises a total frame quantity field and a frame sequence number field, the total frame quantity field indicates a total quantity N of SLC PDUs comprised in the first SLC SDU, and the frame sequence number field indicates a frame sequence number of the first SLC PDU in the first SLC SDU; and
sending, by the terminal, the N SLC PDUs to the satellite network device.

3. The method according to claim 2, wherein the first application layer receipt information further indicates that the satellite network device has received all the N SLC PDUs of the first SLC SDU.

4. The method according to claim 2, wherein before the receiving, by the terminal, first application layer receipt information sent by the satellite network device, the method further comprises:
receiving, by the terminal, a first acknowledgment character ACK sent by the satellite network device, wherein the first ACK indicates that the satellite network device has received all the N SLC PDUs of the first SLC SDU.

5. The method according to claim 3, wherein before the receiving, by the terminal, first application layer receipt information sent by the satellite network device, the method further comprises:
receiving, by the terminal, a second acknowledgment character ACK sent by the satellite network device, wherein the second ACK indicates a frame sequence number of an SLC PDU that is in the first SLC SDU and that is not received by the satellite network device; and
retransmitting, by the terminal to the satellite network device, the SLC PDU that is in the first SLC SDU and that is not received by the satellite network device.

6. The method according to claim 4, wherein before the receiving, by the terminal, a first acknowledgment character ACK sent by the satellite network device, the method further comprises:
receiving, by the terminal, a second acknowledgment character ACK sent by the satellite network device, wherein the second ACK indicates a frame sequence number of an SLC PDU that is in the first SLC SDU and that is not received by the satellite network device; and
retransmitting, by the terminal to the satellite network device, the SLC PDU that is in the first SLC SDU and that is not received by the satellite network device.

7. The method according to any one of claims 2 to 6, wherein the sending, by the terminal, the N SLC PDUs to the satellite network device specifically comprises:
delivering, by the terminal, the first SLC PDU from the SLC layer of the terminal to a physical PHY layer, as a first user frame of the PHY layer of the terminal;
performing, by the terminal, physical layer processing on the first user frame to obtain first inbound data; and
sending, by the terminal, the first inbound data to the satellite network device.

8. The method according to any one of claims 1 to 7, wherein before the sending, by a terminal, a first MDCP PDU in a first application layer packet to a satellite network device, the method further comprises:
obtaining, by the terminal at the message data convergence protocol MDCP layer, the first application layer packet delivered by an application layer of the terminal; and
using, by the terminal, the first application layer packet as an MDCP SDU at the MDCP layer, and after padding data and a redundancy length indicator field are added to the MDCP SDU, segmenting an obtained MDCP SDU into M MDCP PDUs, wherein M is a positive integer, the redundancy length indicator field indicates a data length of the padding data, and the M MDCP PDUs comprise the first MDCP PDU.

9. The method according to claim 8, wherein the method further comprises:
delivering, by the terminal, the M MDCP PDUs from the MDCP layer to the SLC layer as M SLC SDUs of the SLC layer, wherein the M SLC SDUs comprise the first SLC SDU.

10. The method according to claim 8 or 9, wherein before the obtaining, by the terminal at the MDCP layer, the first application layer packet delivered by an application layer of the terminal, the method further comprises:
obtaining, by the terminal, original data;
encoding and compressing, by the terminal, the original data at the application layer to obtain first compressed data;
encrypting, by the terminal, the first compressed data at the application layer to obtain first encrypted data; and
adding, by the terminal, packet header information to a header of the first encrypted data, to obtain the first application layer packet, wherein the packet header information comprises a compression indicator field and an encryption indicator field, the compression indicator field indicates an encoding and compression algorithm used when the original data is compressed, and the encryption indicator field indicates an encryption algorithm used when the first compressed data is encrypted.

11. The method according to any one of claims 1 to 10, wherein after the receiving, by the terminal, first application layer receipt information sent by the satellite network device, the method further comprises:
when the terminal determines, based on the first application layer receipt information, that the satellite network device fails to parse the first application layer packet, retransmitting, by the terminal, the first application layer packet to the satellite network device.

12. The method according to claim 10, wherein the first application layer receipt information comprises a first parsing result, and the first parsing result indicates that the satellite network device fails to decrypt the first application layer packet; and after the receiving, by the terminal, first application layer receipt information sent by the satellite network device, the method further comprises:
negotiating, by the terminal, key information with the satellite network device;
encrypting, by the terminal, the first compressed data based on the negotiated key information, to obtain second encrypted data; and
sending, by the terminal, a second application layer packet comprising the second encrypted data to the satellite network device.

13. The method according to claim 10 or 12, wherein the first application layer receipt information comprises a second parsing result, and the second parsing result indicates that the satellite network device fails to decode and decompress an application layer packet; and after the receiving, by the terminal, first application layer receipt information sent by the satellite network device, the method further comprises:
negotiating, by the terminal, a codebook with the satellite network device based on the second parsing result;
encoding and compressing, by the terminal, the original data based on the negotiated codebook to obtain second compressed data;
encrypting, by the terminal, the second compressed data to obtain third encrypted data;
and
sending, by the terminal, a third application layer packet to the satellite network device, wherein the third application layer packet comprises the third encrypted data.

14. A communication apparatus (1400) supporting a short message communication function, comprising one or more processors (1420), one or more memories, and a transceiver (1410), wherein the transceiver and the one or more memories are coupled to the one or more processors, the one or more memories are configured to store computer program code, the computer program code comprises computer instructions, and when the one or more processors execute the computer instructions, the communication apparatus is enabled to perform the method according to any one of claims 1 to 13.

15. A chip or a chip system (1600) supporting a short message communication function, used in a terminal and comprising a processing circuit and an interface circuit, wherein the interface circuit is configured to receive code instructions and transmit the code instructions to the processing circuit, and the processing circuit is configured to run the code instructions to perform the method according to any one of claims 1 to 13.

## Patentansprüche

1. Verfahren zum Übertragen eines Anwendungsschichtempfangs in einem Satellitenkommunikationssystem, das eine Kurznachrichtenkommunikationsfunktion unterstützt, das umfasst:
Senden (S1301), durch ein Endgerät, einer ersten Nachrichtendatenkonvergenzprotokollschicht-Protokolldateneinheit (MDCP-PDU) in einem ersten Anwendungsschichtpaket an eine Satellitennetzwerkvorrichtung, wobei Paketkopfinformationen der ersten MDCP-PDU ein Nachfolgeranzeigefeld umfassen, und das Nachfolgeranzeigefeld eine Sequenz der ersten MDCP-PDU in dem ersten Anwendungsschichtpaket anzeigt; und
wenn die erste MDCP-PDU eine letzte MDCP-PDU in dem ersten Anwendungsschichtpaket ist, Empfangen (S1304), durch das Endgerät, von ersten Anwendungsschichtempfangsinformationen, die durch die Satellitennetzwerkvorrichtung gesendet werden, wobei die ersten Anwendungsschichtempfangsinformationen ein Ergebnis, das durch Analysieren des ersten Anwendungsschichtpakets durch die Satellitennetzwerkvorrichtung erhalten wird, anzeigen.

2. Verfahren nach Anspruch 1, wobei das Senden, durch ein Endgerät, einer ersten MDCP-PDU in einem ersten Anwendungsschichtpaket an eine Satellitennetzwerkvorrichtung speziell umfasst:
Verwenden, durch das Endgerät, der ersten MDCP-PDU als eine erste Satellitenverbindungssteuerungsschichtdienstdateneinheit (SLC-SDU) einer SLC-Schicht des Endgeräts, und Übergeben der ersten MDCP-PDU von einer MDCP-Schicht des Endgeräts an die SLC-Schicht des Endgeräts;
Segmentieren, durch das Endgerät, der ersten SLC-SDU in N Satellitenverbindungssteuerungsschichtprotokolldateneinheiten (SLC-PDUs) auf der SLC-Schicht des Endgeräts, wobei N eine positive ganze Zahl ist, die N SLC-PDUs eine erste SLC-PDU umfassen, Rahmenkopfinformationen der ersten SLC-PDU ein Gesamtrahmenanzahlfeld und ein Rahmensequenznummernfeld umfassen, das Gesamtrahmenanzahlfeld eine Gesamtanzahl N von SLC-PDUs, die in der ersten SLC-SDU umfasst sind, anzeigt, und das Rahmensequenznummernfeld eine Rahmensequenznummer der ersten SLC-PDU in der ersten SLC-SDU anzeigt; und Senden, durch das Endgerät, der N SLC-PDUs an die Satellitennetzwerkvorrichtung.

3. Verfahren nach Anspruch 2, wobei die ersten
Anwendungsschichtempfangsinformationen ferner anzeigen, dass die Satellitennetzwerkvorrichtung alle N SLC-PDUs der ersten SLC-SDU empfangen hat.

4. Verfahren nach Anspruch 2, wobei vor dem Empfangen, durch das Endgerät, von ersten Anwendungsschichtempfangsinformationen, die durch die Satellitennetzwerkvorrichtung gesendet werden, das Verfahren ferner umfasst:
Empfangen, durch das Endgerät, eines ersten Bestätigungszeichens (ACK), das durch die Satellitennetzwerkvorrichtung gesendet wird, wobei das erste ACK anzeigt, dass die Satellitennetzwerkvorrichtung alle N SLC-PDUs der ersten SLC-SDU empfangen hat.

5. Verfahren nach Anspruch 3, wobei vor dem Empfangen, durch das Endgerät, von ersten Anwendungsschichtempfangsinformationen, die durch die Satellitennetzwerkvorrichtung gesendet werden, das Verfahren ferner umfasst:
Empfangen, durch das Endgerät, eines zweiten Bestätigungszeichens (ACK), das durch die Satellitennetzwerkvorrichtung gesendet wird, wobei das zweite ACK eine Rahmensequenznummer einer SLC-PDU anzeigt, die sich in der ersten SLC-SDU befindet und die nicht durch die Satellitennetzwerkvorrichtung empfangen wird; und
erneutes Übertragen, durch das Endgerät an die Satellitennetzwerkvorrichtung, der SLC-PDU, die sich in der ersten SLC-SDU befindet und die nicht durch die Satellitennetzwerkvorrichtung empfangen wird.

6. Verfahren nach Anspruch 4, wobei vor dem Empfangen, durch das Endgerät, eines ersten Bestätigungszeichens ACK, das durch die Satellitennetzwerkvorrichtung gesendet wird, das Verfahren ferner umfasst:
Empfangen, durch das Endgerät, eines zweiten Bestätigungszeichens (ACK), das durch die Satellitennetzwerkvorrichtung gesendet wird, wobei das zweite ACK eine Rahmensequenznummer einer SLC-PDU anzeigt, die sich in der ersten SLC-SDU befindet und die nicht durch die Satellitennetzwerkvorrichtung empfangen wird; und
erneutes Übertragen, durch das Endgerät an die Satellitennetzwerkvorrichtung, der SLC-PDU, die sich in der ersten SLC-SDU befindet und die nicht durch die Satellitennetzwerkvorrichtung empfangen wird.

7. Verfahren nach einem der Ansprüche 2 bis 6, wobei das Senden, durch das Endgerät, der N SLC PDUs an die Satellitennetzwerkvorrichtung speziell umfasst:
Übergeben, durch das Endgerät, der ersten SLC-PDU von der SLC-Schicht des Endgeräts an eine physikalische (PHY) Schicht als einen ersten Benutzerrahmen der PHY-Schicht des Endgeräts;
Durchführen, durch das Endgerät, einer Verarbeitung auf der physikalischen Schicht an dem ersten Benutzerrahmen, um erste eingehende Daten zu erhalten; und
Senden, durch das Endgerät, der eingehenden Daten an die Satellitennetzwerkvorrichtung.

8. Verfahren nach einem der Ansprüche 1 bis 7, wobei vor dem Senden, durch ein Endgerät, einer ersten MDCP-PDU in einem ersten Anwendungsschichtpaket an eine Satellitennetzwerkvorrichtung, das Verfahren ferner umfasst:
Erhalten, durch das Endgerät auf der Nachrichtendatenkonvergenzprotokoll(MDCP)-Schicht, des ersten Anwendungsschichtpakets, das durch eine Anwendungsschicht des Endgeräts übergeben wird; und
Verwenden, durch das Endgerät, des ersten Anwendungsschichtpakets als eine MDCP-SDU auf der MDCP-Schicht, und, nachdem Fülldaten und ein Redundanzlängenanzeigefeld zu der MDCP-SDU hinzugefügt wurden, Segmentieren einer erhaltenen MDCP-SDU in M MDCP-PDUs, wobei M eine positive ganze Zahl ist, das Redundanzlängenanzeigefeld eine Datenlänge der Fülldaten anzeigt und die M MDCP-PDUs die erste MDCP-PDU umfassen.

9. Verfahren nach Anspruch 8, wobei das Verfahren ferner umfasst:
Übergeben, durch das Endgerät, der M MDCP-PDUs von der MDCP-Schicht an die SLC-Schicht als M SLC-SDUs der SLC-Schicht, wobei die M SLC-SDUs die erste SLC-SDU umfassen.

10. Verfahren nach Anspruch 8 oder 9, wobei vor dem Erhalten, durch das Endgerät auf der MDCP-Schicht, des ersten Anwendungsschichtpakets, das durch eine Anwendungsschicht des Endgeräts übergeben wird, das Verfahren ferner umfasst:
Erhalten, durch das Endgerät, von Originaldaten;
Codieren und Komprimieren, durch das Endgerät, der Originaldaten auf der Anwendungsschicht, um erste komprimierte Daten zu erhalten;
Verschlüsseln, durch das Endgerät, der ersten komprimierten Daten auf der Anwendungsschicht, um erste verschlüsselte Daten zu erhalten; und
Hinzufügen, durch das Endgerät, von Paketkopfinformationen zu einem Kopf der ersten verschlüsselten Daten, um das erste Anwendungsschichtpaket zu erhalten,
wobei die Paketkopfinformationen ein Komprimierungsanzeigefeld und ein Verschlüsselungsanzeigefeld umfassen, wobei das Komprimierungsanzeigefeld einen Codierungs- und Komprimierungsalgorithmus anzeigt, der verwendet wird,
wenn die Originaldaten komprimiert werden, und das Verschlüsselungsanzeigefeld einen Verschlüsselungsalgorithmus anzeigt, der verwendet wird, wenn die ersten komprimierten Daten verschlüsselt werden.

11. Verfahren nach einem der Ansprüche 1 bis 10, wobei nach dem Empfangen, durch das Endgerät, von ersten Anwendungsschichtempfangsinformationen, die durch die Satellitennetzwerkvorrichtung gesendet werden, das Verfahren ferner umfasst:
wenn das Endgerät basierend auf den ersten Anwendungsschichtempfangsinformationen bestimmt, dass die Satellitennetzwerkvorrichtung das erste Anwendungsschichtpaket nicht analysieren kann, erneutes Übertragen, durch das Endgerät, des ersten Anwendungsschichtpakets an die Satellitennetzwerkvorrichtung.

12. Verfahren nach Anspruch 10, wobei die ersten Anwendungsschichtempfangsinformationen ein erstes Analyseergebnis umfassen und das erste Analyseergebnis anzeigt, dass die Satellitennetzwerkvorrichtung das erste Anwendungsschichtpaket nicht entschlüsseln kann; und nach dem Empfangen, durch das Endgerät, von ersten Anwendungsschichtempfangsinformationen, die durch die Satellitennetzwerkvorrichtung gesendet werden, das Verfahren ferner umfasst:
Aushandeln, durch das Endgerät, von Schlüsselinformationen mit der Satellitennetzwerkvorrichtung;
Verschlüsseln, durch das Endgerät, der ersten komprimierten Daten basierend auf den ausgehandelten Schlüsselinformationen, um zweite verschlüsselte Daten zu erhalten; und
Senden, durch das Endgerät, eines zweiten Anwendungsschichtpakets, das die zweiten verschlüsselten Daten umfasst, an die Satellitennetzwerkvorrichtung.

13. Verfahren nach Anspruch 10 oder 12, wobei die ersten
Anwendungsschichtempfangsinformationen ein zweites Analyseergebnis umfassen, und das zweite Analyseergebnis anzeigt, dass die Satellitennetzwerkvorrichtung ein Anwendungsschichtpaket nicht decodieren und dekomprimieren kann; und nach dem Empfangen, durch das Endgerät, von ersten
Anwendungsschichtempfangsinformationen, die durch die Satellitennetzwerkvorrichtung gesendet werden, das Verfahren ferner umfasst:
Aushandeln, durch das Endgerät, eines Codebuchs mit der Satellitennetzwerkvorrichtung basierend auf dem zweiten Analyseergebnis;
Codieren und Komprimieren, durch das Endgerät, der Originaldaten basierend auf dem ausgehandelten Codebuch, um zweite komprimierte Daten zu erhalten;
Verschlüsseln, durch das Endgerät, der zweiten komprimierten Daten, um dritte verschlüsselte Daten zu erhalten; und
Senden, durch das Endgerät, eines dritten Anwendungsschichtpakets an die Satellitennetzwerkvorrichtung, wobei das dritte Anwendungsschichtpaket die dritten verschlüsselten Daten umfasst.

14. Kommunikationseinrichtung (1400), die eine Kurznachrichtenkommunikationsfunktion unterstützt, die einen oder mehrere Prozessoren (1420), einen oder mehrere Speicher und einen Sendeempfänger (1410) umfasst, wobei der Sendeempfänger und der eine oder die mehreren Speicher mit dem einen oder den mehreren Prozessoren gekoppelt sind, der eine oder die mehreren Speicher konfiguriert sind, um Computerprogrammcode zu speichern, der Computerprogrammcode Computeranweisungen umfasst, und wenn der eine oder die mehreren Prozessoren die Computeranweisungen ausführen, die Kommunikationseinrichtung aktiviert wird, um das Verfahren nach einem der Ansprüche 1 bis 13 durchzuführen.

15. Chip oder ein Chipsystem (1600), das eine Kurznachrichtenkommunikationsfunktion unterstützt, der/das in einem Endgerät verwendet wird und eine Verarbeitungsschaltung und eine Schnittstellenschaltung umfasst, wobei die Schnittstellenschaltung konfiguriert ist, um Codeanweisungen zu empfangen und die Codeanweisungen an die Verarbeitungsschaltung zu übertragen, und die Verarbeitungsschaltung konfiguriert ist, um die Codeanweisungen laufen zu lassen, um das Verfahren nach einem der Ansprüche 1 bis 13 durchzuführen.

## Revendications

1. Procédé de transmission de réception de couche d'application dans un système de communication par satellite prenant en charge une fonction de communication par messages courts, comprenant :
l'envoi (S1301), par un terminal, d'une première unité de données de protocole de couche de protocole de convergence de données de message PDU MDCP dans un premier paquet de couche d'application à un dispositif de réseau satellite, dans lequel des informations d'en-tête de paquet de la première PDU MDCP comprennent un champ d'indicateur successeur, et le champ d'indicateur successeur indique une séquence de la première PDU MDCP dans le premier paquet de couche d'application ; et
lorsque la première PDU MDCP est une dernière PDU MDCP dans le premier paquet de couche d'application, la réception (S1304), par le terminal, de premières informations de réception de couche d'application envoyées par le dispositif de réseau satellite, dans lequel les premières informations de réception de couche d'application indiquent un résultat obtenu par analyse du premier paquet de couche d'application par le dispositif de réseau satellite.

2. Procédé selon la revendication 1, dans lequel l'envoi, par un terminal, d'une première PDU MDCP dans un premier paquet de couche d'application à un dispositif de réseau satellite comprend spécifiquement :
l'utilisation, par le terminal, de la première PDU MDCP en tant que première unité de données de service de couche de commande de liaison satellite SDU SLC d'une couche SLC du terminal, et la distribution de la première PDU MDCP d'une couche MDCP du terminal à la couche SLC du terminal ;
la segmentation, par le terminal, de la première SDU SLC en N unités de données de protocole de couche de commande de liaison satellite PDU SLC au niveau de la couche SLC du terminal, dans lequel N est un nombre entier positif, les N PDU SLC comprennent une première PDU SLC, des informations d'en-tête de trame de la première PDU SLC comprennent un champ de quantité de trames totale et un champ de numéro de séquence de trame, le champ de quantité totale de trames indique une quantité totale N de PDU SLC comprises dans la première SDU SLC, et le champ de numéro de séquence de trame indique un numéro de séquence de trame de la première PDU SLC dans la première SDU SLC ; et
l'envoi, par le terminal, des N PDU SLC au dispositif de réseau satellite.

3. Procédé selon la revendication 2, dans lequel les premières informations de réception de couche d'application indiquent en outre que le dispositif de réseau satellite a reçu toutes les N PDU SLC de la première SDU SLC.

4. Procédé selon la revendication 2, dans lequel, avant la réception, par le terminal, de premières informations de réception de couche d'application envoyées par le dispositif de réseau satellite, le procédé comprenant en outre :
la réception, par le terminal, d'un premier caractère d'accusé de réception ACK envoyé par le dispositif de réseau satellite, dans lequel le premier ACK indique que le dispositif de réseau satellite a reçu toutes les N PDU SLC de la première SDU SLC.

5. Procédé selon la revendication 3, dans lequel, avant la réception, par le terminal, de premières informations de réception de couche d'application envoyées par le dispositif de réseau satellite, le procédé comprenant en outre :
la réception, par le terminal, d'un second caractère d'accusé de réception ACK envoyé par le dispositif de réseau satellite, dans lequel le second ACK indique un numéro de séquence de trame d'une PDU SLC qui est dans la première SDU SLC et qui n'est pas reçue par le dispositif de réseau satellite ; et
la retransmission, par le terminal au dispositif de réseau satellite, de la PDU SLC qui est dans la première SDU SLC et qui n'est pas reçue par le dispositif de réseau satellite.

6. Procédé selon la revendication 4, dans lequel, avant la réception, par le terminal, d'un premier caractère d'accusé de réception ACK envoyé par le dispositif de réseau satellite, le procédé comprend en outre :
la réception, par le terminal, d'un second caractère d'accusé de réception ACK envoyé par le dispositif de réseau satellite, dans lequel le second ACK indique un numéro de séquence de trame d'une PDU SLC qui est dans la première SDU SLC et qui n'est pas reçue par le dispositif de réseau satellite ; et
la retransmission, par le terminal au dispositif de réseau satellite, de la PDU SLC qui est dans la première SDU SLC et qui n'est pas reçue par le dispositif de réseau satellite.

7. Procédé selon l'une quelconque des revendications 2 à 6, dans lequel l'envoi, par le terminal, des N PDU SLC au dispositif de réseau satellite comprend spécifiquement :
la distribution, par le terminal, de la première PDU SLC de la couche SLC du terminal à une couche physique PHY, en tant que première trame utilisateur de la couche PHY du terminal ;
la réalisation, par le terminal, d'un traitement de couche physique sur la première trame utilisateur pour obtenir des premières données entrantes ; et
l'envoi, par le premier terminal, des premières données entrantes au dispositif de réseau satellite.

8. Procédé selon l'une quelconque des revendications 1 à 7, dans lequel, avant l'envoi, par un terminal, d'une première PDU MDCP dans un premier paquet de couche d'application à un dispositif de réseau satellite, le procédé comprend en outre :
l'obtention, par le terminal au niveau de la couche de protocole de convergence de données de message MDCP, du premier paquet de couche d'application délivré par une couche d'application du terminal ; et
l'utilisation, par le terminal, du premier paquet de couche d'application en tant que SDU MDCP au niveau de la couche MDCP, et après que des données de remplissage et un champ d'indicateur de longueur de redondance ont été ajoutés à la SDU MDCP, la segmentation d'une SDU MDCP obtenue en M PDU MDCP, dans lequel M est un nombre entier positif, le champ d'indicateur de longueur de redondance indique une longueur de données des données de remplissage, et les M PDU MDCP comprennent la première PDU MDCP.

9. Procédé selon la revendication 8, dans lequel le procédé comprend en outre :
la distribution, par le terminal, des M PDU MDCP de la couche MDCP à la couche SLC en tant que M SDU SLC de la couche SLC, dans lequel les M SDU SLC comprennent la première SDU SLC.

10. Procédé selon la revendication 8 ou 9, dans lequel, avant l'obtention, par le terminal au niveau de la couche MDCP, du premier paquet de couche d'application délivré par une couche d'application du terminal, le procédé comprend en outre :
l'obtention, par le terminal, de données d'origine ;
l'encodage et la compression, par le terminal, des données d'origine au niveau de la couche d'application pour obtenir des premières données compressées ;
le chiffrement, par le terminal, des premières données compressées au niveau de la couche d'application pour obtenir des premières données chiffrées ; et
l'ajout, par le terminal, d'informations d'en-tête de paquet à un en-tête des premières données chiffrées, pour obtenir le premier paquet de couche d'application, dans lequel les informations d'en-tête de paquet comprennent un champ d'indicateur de compression et un champ d'indicateur de chiffrement, le champ d'indicateur de compression indique un algorithme d'encodage et de compression utilisé lorsque les données d'origine sont compressées, et le champ d'indicateur de chiffrement indique un algorithme de chiffrement utilisé lorsque les premières données compressées sont chiffrées.

11. Procédé selon l'une quelconque des revendications 1 à 10, dans lequel, après la réception par le terminal, de premières informations de réception de couche d'application envoyées par le dispositif de réseau satellite, le procédé comprend en outre :
lorsque le terminal détermine, sur la base des premières informations de réception de couche d'application, que le dispositif de réseau satellite ne parvient pas à analyser le premier paquet de couche d'application, la retransmission, par le terminal, du premier paquet de couche d'application au dispositif de réseau satellite.

12. Procédé selon la revendication 10, dans lequel les premières informations de réception de couche d'application comprennent un premier résultat d'analyse, et le premier résultat d'analyse indique que le dispositif de réseau satellite ne parvient pas à déchiffrer le premier paquet de couche d'application ; et après la réception, par le terminal, de premières informations de réception de couche d'application envoyées par le dispositif de réseau satellite, le procédé comprend en outre :
la négociation, par le terminal, d'informations clés avec le dispositif de réseau satellite ;
le chiffrement, par le terminal, des premières données compressées sur la base des informations clés négociées, pour obtenir des deuxièmes données chiffrées ; et
l'envoi, par le terminal, d'un deuxième paquet de couche d'application comprenant les deuxièmes données chiffrées au dispositif de réseau satellite.

13. Procédé selon la revendication 10 ou 12, dans lequel les premières informations de réception de couche d'application comprennent un second résultat d'analyse, et le second résultat d'analyse indique que le dispositif de réseau satellite ne parvient ni à décoder ni à décompresser un paquet de couche d'application ; et après la réception, par le terminal, de premières informations de réception de couche d'application envoyées par le dispositif de réseau satellite, le procédé comprend en outre :
la négociation, par le terminal, d'un livre de codes avec le dispositif de réseau satellite sur la base du second résultat d'analyse ;
l'encodage et la compression, par le terminal, des données d'origine sur la base du livre de codes négocié pour obtenir des secondes données compressées ;
le chiffrement, par le terminal, des secondes données compressées pour obtenir des troisièmes données chiffrées ; et
l'envoi, par le terminal, d'un troisième paquet de couche d'application au dispositif de réseau satellite, dans lequel le troisième paquet de couche d'application comprend les troisièmes données chiffrées.

14. Appareil de communication (1400) prenant en charge une fonction de communication par messages courts, comprenant un ou plusieurs processeurs (1420), une ou plusieurs mémoires, et un émetteur-récepteur (1410), dans lequel l'émetteur-récepteur et la ou les mémoires sont couplés au ou aux processeurs, la ou les mémoires sont configurées pour stocker un code de programme informatique, le code de programme informatique comprend des instructions informatiques, et lorsque le ou les processeurs exécutent les instructions informatiques, l'appareil de communication est activé pour réaliser le procédé selon l'une quelconque des revendications 1 à 13.

15. Puce ou système de puce (1600) prenant en charge une fonction de communication par messages courts, utilisé dans un terminal et comprenant un circuit de traitement et un circuit d'interface, dans lequel le circuit d'interface est configuré pour recevoir des instructions de code et transmettre les instructions de code au circuit de traitement, et le circuit de traitement est configuré pour exécuter les instructions de code pour réaliser le procédé selon l'une quelconque des revendications 1 à 13.
